# EUROPEAN PATENT APPLICATION

(11) **EP 3 335 862 A1**
(43) Date of publication of application: **20.06.2018**
(21) Application number: 16842014.9
(22) Date of filing: 02.09.2016
(51) Int. Cl.: B29C 67/00, B33Y 10/00, B33Y 30/00

(54) **METHOD FOR MANUFACTURING THREE-DIMENSIONAL MODELED OBJECT AND NOZZLE MOVEMENT PATH DATA CREATION METHOD USED IN SAME, AND DEVICE FOR MANUFACTURING THREE-DIMENSIONAL MODELED OBJECT AND NOZZLE MOVEMENT PATH DATA CREATION PROGRAM USED IN SAME**

(30) Priority: 04.09.2015 JP 2015174937; 24.06.2016 JP 2016125643
(71) Applicant: JSR Corporation, Minato-ku Tokyo 105-8640 (JP); National University Corporation of Yamagata University, Yamagata-shi Yamagata 990-8560 (JP); Sunarrow Ltd., Chuo-ku, Tokyo 104-0032 (JP)
(72) Inventor: HAYASHIDA, Taizo, Tokyo 105-8640 (JP); ABE, Shigeru, Tokyo 105-8640 (JP); FURUKAWA, Hidemitsu, Yamagata-shi Yamagata 990-8560 (JP); KAWAKAMI, Masaru, Yamagata-shi Yamagata 990-8560 (JP); SAITO, Azusa, Yamagata-shi Yamagata 990-8560 (JP); TOBA, Kei, Tokyo 104-0032 (JP); TANAKA, Masataka, Tokyo 104-0032 (JP)
(74) Representative: Kramer Barske Schmidtchen Patentanwälte PartG mbB
(86) International application number: PCT/JP2016/075845
(87) International publication number: WO 2017/038985

(57) **Abstract**

Provided are a method for manufacturing a three-dimensional object and a method for preparing data for a nozzle movement path(s) to be used in the same, and an apparatus for manufacturing the three-dimensional object and a program for preparing data for movement path(s) of a nozzle(s) to be used in the same, which can improve shaping precision and speed of a three-dimensional object having a soft part. The step of forming an outer shell material portion (21) that constitutes a part of an outer shell (2) of a three-dimensional object (1) by ejecting a hard shaping material (20) from a nozzle onto a stage, and the step of forming an inner core material portion (31) that constitutes a part of an inner core (3) of the three-dimensional object (1) by ejecting a soft shaping material (30) from a nozzle to an inner region surrounded by the outer shell material portion (21) are repeated. Thus, the three-dimensional object (1) including the outer shell (2) formed from the outer shell material portion (21) accumulated in plural layers and the inner core (3) formed from the inner core material portion (31) accumulated in plural layers.

## Description

### TECHNICAL FIELD

The present invention relates to a method for manufacturing a three-dimensional object formed of three-dimensional object shaping material(s) ejected from nozzle(s) onto a stage and a method for preparing data for nozzle movement path to be used in said method, and an apparatus for manufacturing a three-dimensional object and a program for preparing data for nozzle movement path to be used in the apparatus.

### BACKGROUND ART

Soft three-dimensional objects such as high functional gels and soft materials are new organic materials that are expected to be applied to human organ models, medical equipment parts, artificial skins, artificial blood vessels, automobile parts and so on.

For example, Patent Document 1 has a description of a human body affected part entity model and a method for manufacturing the same, in which an outer shell part composed of a photocurable resin cured body is formed on the basis of tomographic data of a patient obtained by MRI or CT scanning and an internal cavity part located inside the outer shell portion is filled with a core material part composed of a fluidizable solid. In the manufacturing method, the outer shell portion is formed by stereolithography. In stereolithography, the surface of photocurable resin retained in a liquid tank is scanned with an ultraviolet laser beam to cure the photocurable resin and raise the surface of the liquid bath stepwise, thus a three-dimensional object composed of a plurality of cured layers of the photocurable resin is formed.

As one method for shaping a three-dimensional resin object, fused deposition modeling is known. In fused deposition modeling, an elongate solid resin called filament is fed to a nozzle equipped with a heater by a feeder such as driving rollers, and the resin ejected from the nozzle in a molten state is deposited on a stage to shape a three-dimensional object.

### PRIOR ART LITERATURE

### Patent Document

Patent Document 1: JP-A-2006-78604

### SUMMARY OF THE INVENTION

### PROBLEM TO BE SOLVED BY THE INVENTION

In the case of forming a three-dimensional object using a method such as stereolithography or fused deposition modeling, there is a risk that a three-dimensional object shaping material may flow or deform during shaping. Consequently, when forming the three-dimensional object, it is necessary to decide either one of the followings should be prioritized, i.e. reduction of the shaping speed in order to improve shaping precision or reduction of the shaping precision in order to improve the shaping speed, and thus it has been difficult to achieve both of the shaping precision and the shaping speed. Especially in the case of shaping a three-dimensional object including a soft part, the three-dimensional object shaping material is more likely to flow or deform during the shaping, therefore it has been particularly difficult to achieve improvement in both of the shaping precision and the shaping speed.

The present invention has been made in view of this background, and has been achieved in an attempt to provide a method for manufacturing a three-dimensional object and a method for preparing data for a nozzle movement path(s) to be used in said method, and an apparatus for manufacturing a three-dimensional object and a program for preparing data for a nozzle movement path(s) to be used in the apparatus, which make it possible to improve the shaping precision and speed of a three-dimensional object.

### MEANS FOR SOLVING THE PROBLEM

One mode of a first aspect of the present invention is a method for manufacturing a three-dimensional object, including the steps of:
forming an outer shell material portion that constitutes a part of an outer shell of the three-dimensional object by ejecting a shaping material from a nozzle onto a stage with the nozzle and the stage being relatively moving; and
forming an inner core material portion that constitutes a part of an inner core of the three-dimensional object by ejecting a shaping material from a nozzle to an inner region surrounded by the outer shell material portion with the nozzle and the stage being relatively moving.

One mode of a second aspect of the present invention is a method for preparing data for nozzle movement path, to be used in the method for manufacturing a three-dimensional object, including the steps of:
preparing three-dimensional surface data of the three-dimensional object to be shaped by designing or capturing;
processing the three-dimensional surface data into contour layer data in the form of a line by slicing the three-dimensional surface data at regular intervals in a predetermined direction, the contour layer data being accumulated in plural layers in the predetermined direction;
preparing data for the nozzle movement path for the inner core material portion to be used in ejecting the shaping material for forming the inner core material portion from the nozzle on the basis of the contour layer data; and
preparing data for the nozzle movement path for the outer shell material portion to be used in ejecting the shaping material for forming the outer core material portion from the nozzle on the basis of a position resulted by correcting the nozzle movement path for the inner core material portion to be shifted outward therefrom by a predetermined distance.

Another mode of the second aspect of the present invention is a method for preparing data for nozzle movement paths, to be used in the method for manufacturing a three-dimensional object, including the steps of:
preparing three-dimensional surface data of the three-dimensional object to be shaped by designing or capturing;
processing the three-dimensional surface data into contour layer data in the form of a line by slicing the three-dimensional surface data at regular intervals in a predetermined direction, the contour layer data being accumulated in plural layers in the predetermined direction;
preparing data for the nozzle movement path for the outer shell material portion to be used in ejecting the shaping material for forming the outer shell material portion from the nozzle on the basis of the contour layer data; and
preparing data for the nozzle movement path for the inner core material portion to be used in ejecting the shaping material for forming the inner core material portion from the nozzle by setting a position resulted by correcting the movement path for the outer shell material portion to be shifted inward therefrom by a predetermined distance as a position of a contour in the entirety of the nozzle movement path for the inner core material portion.

One mode of a third aspect of the invention is an apparatus for manufacturing a three-dimensional object including an outer shell and an inner core that is provided inside the outer shell, including:
an outer shell nozzle configured to eject a shaping material for forming the outer shell material portion for use in forming the outer shell;
an inner core nozzle configured to eject a shaping material for forming the inner core material portion for use in forming the inner core;
a stage configured so that the shaping material for forming the outer shell material portion ejected from the outer shell nozzle and the shaping material for forming the inner core material portion ejected from the inner core nozzle are accumulated thereon;
a relative movement device configured to relatively move the stage and the outer shell nozzle and to relatively move the stage and the inner core nozzle; and
a control computer configured to control motions of the outer shell nozzle, the inner core nozzle, and the relative movement device; wherein
the control computer is configured to control so that an outer shell material portion that constitutes a part of the outer shell is formed on the stage using the shaping material for forming the outer shell material portion ejected from the outer shell nozzle, and an inner core material portion that constitutes a part of the inner core is formed on the stage using the shaping material for forming the inner core material portion ejected from the inner core nozzle to an inner region surrounded by the outer shell material portion.

One mode of a fourth aspect of the present invention is a program of a design computer for preparing data for movement paths of the outer shell nozzle and the inner core nozzle, to be used in the manufacturing apparatus for a three-dimensional object, the program instructing the design computer to execute the steps of:
preparing the data for movement path of the inner core nozzle on the basis of contour layer data obtained in the form of a line by slicing three-dimensional surface data of the three-dimensional object to be shaped at regular intervals in the predetermined direction, the contour layer data being accumulated in plural layers in the predetermined direction; and
preparing the data for the movement path of the outer shell nozzle on the basis of a position resulted by correcting the movement path of the inner core nozzle to be shifted outward therefrom by a predetermined distance.

Another mode of the fourth aspect of the present invention is a program of a design computer for preparing data for movement paths of the outer shell nozzle and the inner core nozzle, to be used in the manufacturing apparatus for a three-dimensional object, the program instructing the design computer to execute the steps of:
preparing the data for the movement path of the outer shell nozzle on the basis of contour layer data obtained in the form of a line by slicing three-dimensional surface data of the three-dimensional object to be shaped at regular intervals in the predetermined direction, the contour layer data being accumulated in plural layers in the predetermined direction; and
preparing the data for the movement path of the inner core nozzle on the basis of a position resulted by correcting the movement path of the outer shell nozzle to be shifted inward therefrom by a predetermined distance.

### EFFECTS OF THE INVENTION

In the method for manufacturing a three-dimensional object as one mode of the first aspect of the present invention, the three-dimensional object that has the outer shell and the inner core is formed of the three-dimensional object shaping material(s) ejected from the nozzles. Further, the three-dimensional object is formed from the outer shell material portion that constitutes a part of the outer shell and the inner core material portion that constitutes a part of the inner core in the inner region surrounded by the outer shell material portion.

The outer shell material portion is preferably formed into an annular shape. It is noted that the outer shell material portion is not necessarily required to be formed into a complete annular shape and may be formed into an annular shape partly opened.

The three-dimensional object is shaped by the outer shell material portion and the inner core material portion, so that the inner core material portion can be supported by the outer shell material portion. Accordingly, it is possible to inhibit the three-dimensional object shaping material ejected to the stage to form the inner core material portion from flowing or deforming, and improve the shaping precision and speed of the inner core material portion formed of the three-dimensional object shaping material. Further, even if the inner core material portion is formed of a three-dimensional object shaping material of soft nature, the shaping precision and speed of the inner core material portion formed of the three-dimensional object shaping material can be improved.

Thus, according to the method for manufacturing a three-dimensional object described above, the shaping precision and speed of the three-dimensional object can be improved.

According to the method for preparing data for the nozzle movement paths as one mode of the second aspect of the present invention, it is possible to prepare a nozzle movement path that is suitable for embodying the method for manufacturing a three-dimensional object. Further, a movement path for the outer shell material portion is prepared on the basis of a movement path for the inner core material portion, so that the movement path for the outer shell material portion can be easily prepared.

According to the method for preparing data for the nozzle movement path as another mode of the second aspect of the present invention, it is possible to prepare a nozzle movement path that is suitable for embodying the method for manufacturing a three-dimensional object. Further, a movement path for the inner core material portion is prepared on the basis of the movement path for the outer shell material portion, so that the movement path for the inner core material portion can be easily prepared.

According to the apparatus for manufacturing a three-dimensional object as one mode of the third aspect of the present invention, the shaping precision and speed of the three-dimensional object can be improved similarly as in the method for manufacturing a three-dimensional object.

According to the program for preparing the data for the nozzle movement paths as one mode of the fourth aspect of the present invention, a program for preparing the data for the nozzle movement paths, which is suitable for the control computer in the apparatus for manufacturing a three-dimensional object can be provided.

Also, according to the program for preparing the data for the nozzle movement paths as another mode of the fourth aspect of the present invention, a program for preparing the data for the nozzle movement path that is suitable for the control computer in the apparatus for manufacturing a three-dimensional object can be provided.

### BRIEF DESCRIPTION OF THE DRAWINGS

Figure 1 is an illustration showing a state of performing a first outer shell material portion formation step in accordance with a first embodiment.
Figure 2 is an illustration showing a state after performing the first outer shell material portion formation step in accordance with the first embodiment.
Figure 3 is an illustration showing a state after performing a first inner core material portion formation step in accordance with the first embodiment.
Figure 4 is an illustration showing a state after performing a second outer shell material portion formation step in accordance with the first embodiment.
Figure 5 is an illustration showing a state after performing a second inner core material portion formation step in accordance with the first embodiment.
Figure 6 is an illustration showing a three-dimensional object subjected to an outer shell removal step in accordance with the first embodiment.
Figure 7 is an illustration showing an apparatus for manufacturing a three-dimensional object in accordance with the first embodiment.
Figure 8 is an illustration showing a main part of the apparatus for manufacturing a three-dimensional object in accordance with the first embodiment.
Figure 9 is a flowchart illustrating a method for manufacturing a three-dimensional object in accordance with the first embodiment.
Figure 10a is an illustration for another method for manufacturing a three-dimensional object in accordance with the first embodiment, showing a state after performing the first shell wall part formation step and the first inner core material portion formation step.
Figure 10b is an illustration for another method for manufacturing a three-dimensional object in accordance with the first embodiment, showing a state after performing the second outer shell material portion formation step a plurality of times.
Figure 10c is an illustration for another method for manufacturing a three-dimensional object in accordance with the first embodiment, showing a state after performing the second inner core material portion formation step.
Figure 11a is an illustration for another method for manufacturing a three-dimensional object in accordance with the first embodiment, showing a state after performing the first outer shell material portion formation step.
Figure 11b is an illustration for another method for manufacturing a three-dimensional object in accordance with the first embodiment, showing a state after performing the second outer shell material portion formation step a plurality of times.
Figure 11c is an illustration for another method for manufacturing a three-dimensional object in accordance with the first embodiment, showing a state after performing the first inner core material portion formation step.
Figure 12a is an illustration for another method for manufacturing a three-dimensional object in accordance with the first embodiment, showing a state after performing the first outer shell material portion formation step and the first inner core material portion formation step.
Figure 12b is an illustration for another method for manufacturing a three-dimensional object in accordance with the first embodiment, showing a state after performing the second outer shell material portion formation step and the second inner core material portion formation step a plurality of times.
Figure 12c is an illustration for another method for manufacturing a three-dimensional object in accordance with the first embodiment, showing a state after further performing the second outer shell material portion formation step and the second inner core material portion formation step a plurality of times.
Figure 13 is an illustration showing a three-dimensional object from which an outer shell is to be removed in accordance with a second embodiment.
Figure 14 is a flowchart illustrating a method for manufacturing a three-dimensional object in accordance with the second embodiment.
Figure 15 is an illustration showing movement paths for an outer shell material portion and an inner core material portion at the time when an outer shell nozzle and an inner core nozzle being moved relative to a stage in accordance with the third embodiment.
Figure 16 is an illustration showing three-dimensional surface data, contour layer data, and movement paths for the outer shell material portion and the inner core material portion obtained on the basis of the contour layer data in a design computer in accordance with a third embodiment.
Figure 17 is an illustration showing the movement path s for the outer shell material portion and the inner core material portion in the design computer in accordance with the third embodiment.
Figure 18 is an illustration showing the movement path for the outer shell material portion and another movement path for the inner core material portion in the design computer in accordance with the third embodiment.

### MODE FOR CARRYING OUT THE INVENTION

Preferable embodiments of the method for manufacturing a three-dimensional object mentioned above will be described.

The method for manufacturing a three-dimensional object may further include the step of further forming the outer shell material portion by ejecting the shaping material from the nozzle onto the outer shell material portion with the nozzle and the stage being relatively moving; and further forming the inner core material portion by ejecting the shaping material from the nozzle onto the inner core material portion with the nozzle and the stage being relatively moving.

In the method for manufacturing a three-dimensional object, the outer shell material portion and inner core material portion are formed of the three-dimensional object shaping materials ejected from the nozzles, so that the outer shell material portion and the inner core material portion are alternately formed easily. According to conventional methods such as stereolithography, a hard part of a three-dimensional object is entirely formed first, then the inside of the hard part is filled with a soft part. In contrast, in the present method for manufacturing a three-dimensional object, part of a hard part formed of either one of the outer shell material portion and the inner core material portion, and part of a soft part formed of the other one of the outer shell material portion and the inner core material portion, are repeatedly formed sequentially, whereby a shaping speed of the three-dimensional object having the outer shell and the inner core can be improved.

Note that the present invention is not limited to the following embodiments and the embodiments to which changes, improvements and the like are made on the basis of ordinary knowledge of those skilled in the art without departing from the spirit of the present invention are also included in the scope of the present invention.

### (First Embodiment)

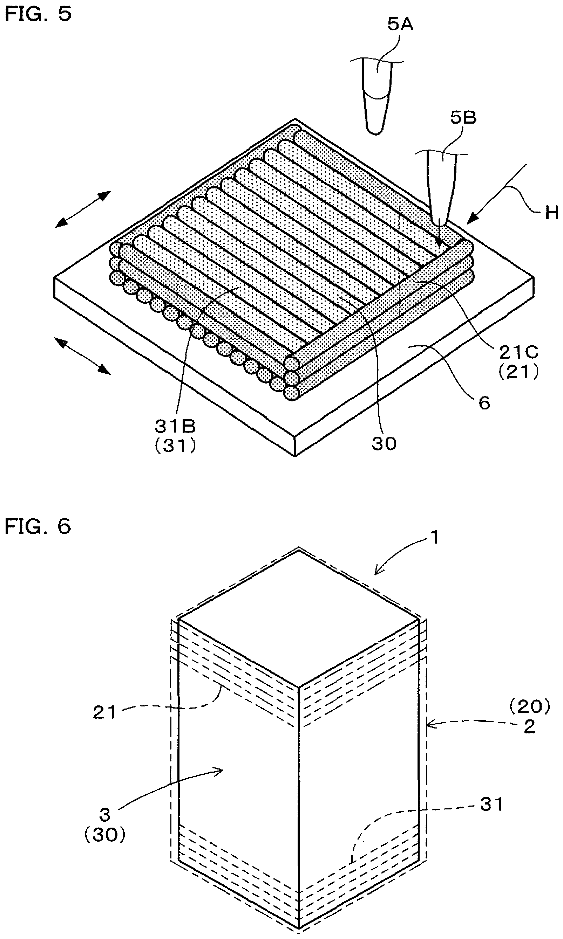

In a method for manufacturing a three-dimensional object 1, a three-dimensional object 1 including an outer shell 2 formed from an outer shell material portion 21 in a form of a plurality of accumulated layers and an inner core 3 formed from an inner core material portion 31 in a form of a plurality of accumulated layers is formed as illustrated in Fig. 6. A step of forming the outer shell material portion 21 (hereinafter referred to as a first outer shell material portion formation step X1), a step of forming an inner core material portion 31 (hereinafter referred to as a first inner core material portion formation step Y1), a step of further forming the outer shell material portion 21 (hereinafter referred to as a second outer shell material portion formation step X2), and a step of further forming the inner core material portion 31 (hereinafter referred to as a second inner core material portion formation step Y2) are performed sequentially to form the three-dimensional object 1.

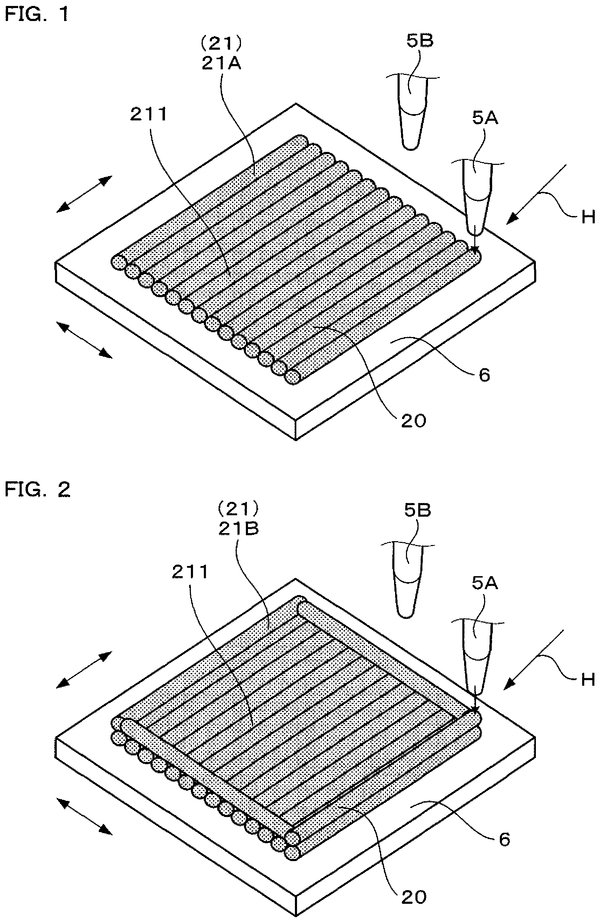

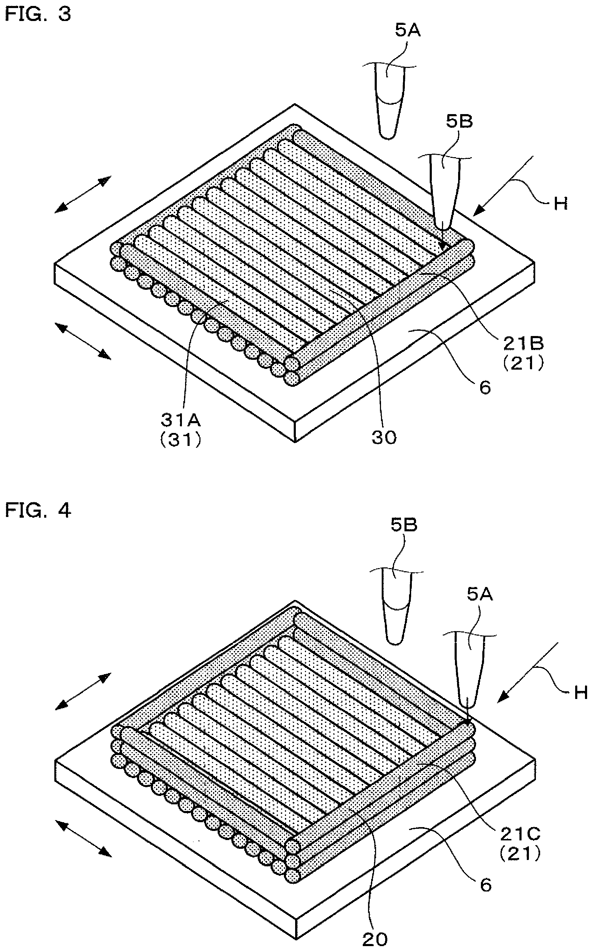

In the first outer shell material portion formation step X1, an outer shell nozzle 5A and the stage 6 are moved relative to each other with an outer shell material portion shaping material 20 as a shaping material for forming the outer shell material portion being ejected from the outer shell nozzle 5A onto the stage 6 as illustrated in Figures 1 and 2 to form an outer shell material portion 21 that constitutes a part of the outer shell 2 of the three-dimensional object 1 to be formed. In the first inner core material portion formation step Y1, an inner core nozzle 5B and the stage 6 are moved relative to each other with an inner core material portion shaping material 30 as a shaping material for forming the inner core material portion being ejected from the inner core nozzle 5B to an inner region surrounded by the outer shell material portion 21 as illustrated in Figure 3 to form an inner core material portion 31 that constitutes a part of an inner core 3 of the three-dimensional object 1 to be formed.

In the second outer shell material portion formation step X2, the outer shell nozzle 5A and the stage 6 are moved relative to each other with the outer shell material portion shaping material 20 being ejected from the outer shell nozzle 5A onto the outer shell material portion 21 as illustrated in Figure 4 to further form the outer shell material portion 21. In the second inner core material portion formation step Y2, the inner core nozzle 5B and the stage 6 are moved relative to each other with the inner core material portion shaping material 30 being ejected from the inner core nozzle 5B onto the inner core material portion 31 as illustrated in Figure 5 to further form the inner core material portion 31.

Then, the second outer shell material portion formation step X2 and the second inner core material portion formation step Y2 are further repeated to form the three-dimensional object 1 including the outer shell 2 formed from the outer shell material portion 21 in a form of the plurality of accumulated layers and the inner core 3 formed from the inner core material portion 31 in a form of the plurality of accumulated layers as illustrated in Figure 6.

### <Manufacturing Apparatus>

A manufacturing apparatus 10 to be used for the method for manufacturing the three-dimensional object 1 will be described first.

In the method for manufacturing the three-dimensional object 1, the manufacturing apparatus 10 including the outer shell nozzle 5A, the inner core nozzle 5B, the stage 6, a relative movement mechanism 7, and a control computer 8 is used as illustrated in Figures 1 to 8. The manufacturing apparatus 10 performs fused deposition modeling.

The outer shell nozzle 5A ejects the outer shell material portion shaping material 20 for forming the outer shell 2. The inner core nozzle 5B ejects the inner core material portion shaping material 30 for forming the inner core 3. The stage 6 is adapted so that the outer shell material portion shaping material 20 ejected from the outer shell nozzle 5A and the inner core material portion shaping material 30 ejected from the inner core nozzle 5B are accumulated thereon. The relative movement mechanism 7 relatively moves the stage 6 and each of the outer shell nozzle 5A and the inner core nozzle 5B two-dimensionally in directions X and y of the plane of the stage 6 and a height direction Z perpendicular to the plane of the stage 6. The control computer 8 is configured to control operations of the outer shell nozzle 5A, the inner core nozzle 5B, and the relative movement mechanism 7.

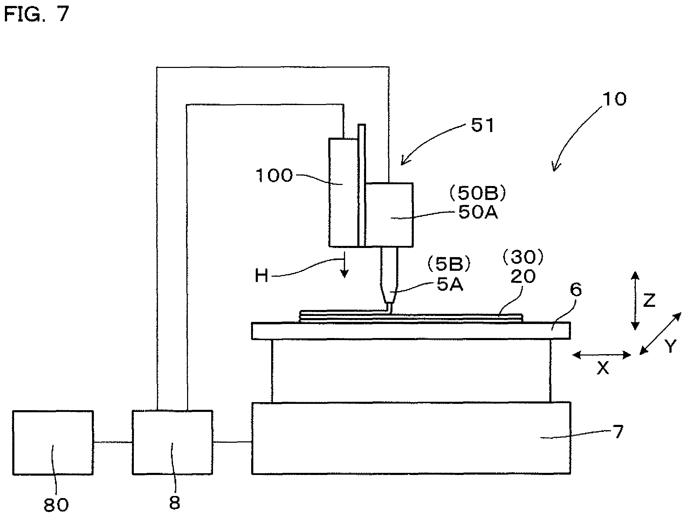

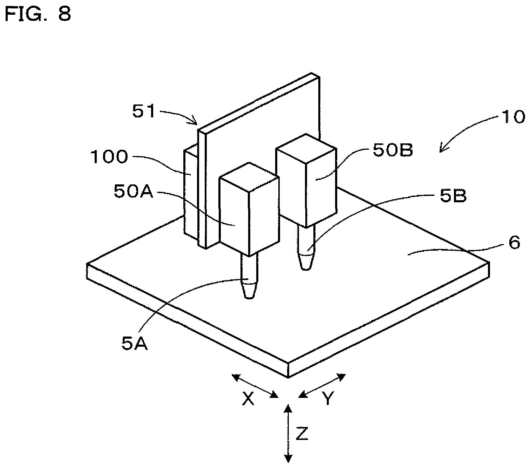

As illustrated in Figures 7 and 8, the outer shell nozzle 5A is provided at an outer shell material discharger (dispenser) 50A configured to feed the outer shell material portion shaping material 20 in a string-like form under heating. The inner core nozzle 5B is provided at an inner core material discharger (dispenser) 50B configured to feed the inner core material portion shaping material 30 in a string-like form under heating. The dischargers 50A and 50B extrude the fluid shaping materials 20 and 30 by pressure, respectively. Note that each of the dischargers 50A and 50B may extrude the shaping material 20 and 30, respectively in a filament form under heating.

The dischargers 50A and 50B may be of a screw type in which the shaping material 20 and 30 are extruded respectively with a screw, a piston type in which the shaping material 20 and 30 are extruded respectively with a screw, or a pump type in which the shaping material 20 and 30 are extruded respectively with a pump.

Note that a single common nozzle may be used for the outer shell nozzle 5A and the inner core nozzle 5B, instead of using separate nozzles.

Each of the nozzles 5A and 5B is provided with an opening/closing mechanism (not shown) capable of opening and closing its aperture in order to control ejection and stopping of the ejection of the shaping material 20 and 30, respectively. The opening/closing mechanism may be constituted of a pin for opening and closing the aperture, an opening/closing section such as a valve, and an actuator for actuating the opening/closing section. The control computer 8 is configured to control operations of each opening/closing mechanism of the nozzles 5A and 5B.

The dischargers 50A and 50B, and the nozzles 5A and 5B are integrated into a head 51. The position of the head 51 in the present embodiment is fixed and the relative movement mechanism 7 in the present embodiment is configured to move the stage 6 relative to the head 51. The stage 6 is a table on which the outer shell material portion shaping material 20 and the inner core material portion shaping material 30 for forming the three-dimensional object 1 are placed. The relative movement mechanism 7 in the present embodiment is configured to move the stage 6 in two horizontal directions orthogonal to each other as planar directions X and Y and moves the stage 6 in a vertical direction as the height direction Z. The relative movement mechanism 7 includes three servomotors for moving the stage 6 in the three directions, respectively. Each of the nozzles 5A and 5B can move relative to the stage 6 three-dimensionally so as to form a three-dimensional shape of the three-dimensional object 1 in various ways.

The control computer 8 is configured so that the outer shell material portion 21 that constitutes a part of the outer shell 2 is formed on the stage 6 from an outer shell material portion shaping material 20 ejected from the outer shell nozzle 5A and the inner core material portion 31 that constitutes a part of the inner core 3 is formed on the stage 6 from the inner core material portion shaping material 30 ejected from the inner core nozzle 5B to an inner region surrounded by the outer shell material portion 21. Data for the movement path to move the outer shell nozzle 5A relative to the stage 6 and data for the movement path to move the inner core nozzle 5B relative to the stage 6 are set in the control computer 8. Each data for the movement path set in the control computer 8 can be changed as needed in accordance with the shape of the three-dimensional object 1 to be formed.

By using the two nozzles, namely the outer shell nozzle 5A and the inner core nozzle 5B, the shaping speed of the three-dimensional object 1 including the outer shell 2 and the inner core 3 can be easily increased.

In the first embodiment, an example in which the two nozzles, namely the outer shell nozzle 5A and the inner core nozzle 5B are used, will be described. Specifically, the outer shell nozzle 5A is used in the first outer shell material portion formation step X1 and the second outer shell material portion formation step X2 whereas the inner core nozzle 5B is used in the first inner core material portion formation step Y1 and the second inner core material portion formation step Y2.

Alternatively, the relative movement mechanism 7 may be configured to move each of the nozzles 5A and 5B relative to the stage 6. In this case, the nozzles 5A and 5B can be moved separately or together. Moreover, the nozzles 5A and 5B can be simultaneously moved separately at the same timing.

Further, the outer shell material portion shaping material 20 and the inner core material portion shaping material 30 are photocurable. The outer shell material portion shaping material 20 ejected from the outer shell nozzle 5A and the inner core material portion shaping material 30 ejected from the inner core nozzle 5B are irradiated with light H such as ultraviolet light to cause polymerization reaction of a polymerizable monomer in the shaping materials 20 and 30 and the shaping materials 20 and 30 become solidified. The apparatus 10 for manufacturing the three-dimensional object 1 includes a light irradiation device 100 for irradiating the shaping material 20 and 30 with the light H such as ultraviolet light. The light irradiation device 100 is integrated into the head 51 together with the dischargers 50A and 50B, and the nozzles 5A and 5B.

### <Three-dimensional Object Shaping Materials>

Three-dimensional object shaping materials (the outer shell material portion shaping material 20 and the inner core material portion shaping material 30) will be described as follows.

The outer shell material portion shaping material 20 for forming the outer shell material portion 21 and the inner core material portion shaping material 30 for forming the inner core material portion 31 contain a polymer, a polymerizable monomer and a solvent. The polymerizable monomer includes at least one kind selected from a radical-polymerizable unsaturated compound and a cationic-polymerizable compound. The solvent is at least one kind selected from a polar solvent and an ionic liquid. The outer shell material portion shaping material 20 and the inner core material portion shaping material 30 include at least one kind selected from a photo-radical-generator and a photo-acid-generator in order to facilitate polymerization reaction of the polymerizable monomer.

### <Polymers>

The three-dimensional object shaping material may include at least one kind selected from a polymer and a polymerizable monomer.

Examples of the polymer include vinyl alcohol polymers, acrylic polymers, vinylidene fluoride polymers, acrylonitrile polymers, and polysaccharides although not being limited thereto. Among these polymers, acrylic polymers, polyvinyl alcohol, and polysaccharides are especially preferable because these polymers impart high strength with respect to the solvent ratio represented by the mass M1 of solvent divided by the mass M2 of polymer, M1/M2.

It is preferable to use the polymer having a polymerizable functional group among these polymers to crosslink by polymerization with the polymerizable monomer which will be described later. Examples of the polymer having a polymerizable functional group include, for example, polymers having a radical-polymerizable functional group and polymers having a cationic-polymerizable functional group although not being limited thereto.

Examples of the radical-polymerizable functional group include (meth)acryloyl groups, vinyl groups, allyl groups, and vinyl ether groups, and acryloyl groups are preferable in terms of the speed of photoinitiated polymerization.

Examples of the cationic-polymerizable functional group include propenyl ether groups, vinyl ether groups, cycloaliphatic epoxy groups, glycidyl groups, vinyl groups, and vinylidene groups, and propenyl ether groups, vinyl ether groups, cycloaliphatic epoxy groups and glycidyl groups are preferable.

Example of the polymer having a radical-polymerizable functional group include polymers produced by denaturing a polymer into which a functional group reactive with an isocyanate group is introduced by using a (meth)acrylic acid derivative or a vinyl derivative each having an isocyanate group.

As a polymer reactive with an isocyanate group, a polymer into which a functional group reactive with an isocyanate group is introduced is preferable. Examples of such a functional group include, for example, hydroxyl groups, carboxyl groups, amino groups, amide groups, and mercapto groups. Examples of such a polymer include polymers having a hydroxyl group, polymers having a carboxyl group, polymers having an amino group, polymers having an amide group, and polymers having a mercapto group.

Examples of a polymer having a hydroxyl group include, for example, vinyl alcohol polymers and polysaccharides. Examples of the polysaccharides include cellulose derivatives such as methyl cellulose, ethyl cellulose, acethyl cellulose, cellulose acetate, and triacetyl cellulose, acidic cellulose derivatives having a carboxyl group in a side chain, polyvinyl alcohol, dextran, alkyl cellulose, agarose, pullulan, inulin, and chitosan. Examples of a vinyl alcohol polymer include poly 2-hydroxypropyl (meth)acrylate, and poly 2-hydroxyethyl (meth)acrylate.

Examples of a polymer having a carboxyl group include, for example, copolymers containing (meth)acrylic acid esters and (meth)acrylic acid as a copolymer component.

Examples of a polymer having an amino group include, for example, polyallylamine, polyethylenimine, poly 3-aminopropyl (meth)acrylate, poly 3-aminopropyl (meth)acrylamide, chitosan, diallylamine-acetatesulfur dioxide copolymers, and acrylamide-diallyldimethylammonium chloride copolymers.

Examples of a polymer having an amide group include, for example, polyacrylamide, poly N,N-dimethylacrylamide, polyvinyl pyrrolidone, polyvinyl caprolactam, polyvinyl pyrrolidone/vinyl acetate copolymer, vinylpyrrolidone/vinylcaprolactam copolymer, vinylpyrrolidone/vinylimidazole copolymer, vinylpyrrolidone/ acrylic acid copolymer, vinylpyrrolidone/methacrylic acid copolymer, vinylpyrrolidone/3-methyl-1-vinylimidazolium salt copolymer, N-vinylpyrrolidone, N-vinylpiperidone, N-vinylcaprolactam, protein, polypeptide, and oligopeptide.

Examples of a polymer having a mercapto group include, for example, polysulfide containing a thiol group at the end.

Examples of a (meth)acrylic acid derivative or vinyl derivative both having an isocyanate group include 2-methacryloyloxyethyl isocyanate, 2-acryloyloyloxyethyl isocyanate, and 2-(2-methacryloyloxyethyloxy)ethyl isocyanate. Note that examples of (meth)acrylic acid derivatives or vinyl derivatives both having an isocyanate group also include those that have a blocked isocyanate group. Examples of the blocked isocyanate groups include, for example, 1,1-(bisacryloyloxymethyl)ethyl isocyanate, 2-(0-[1'-methylpropylideneamino]carboxylamino)ethyl methacrylate 2-[(3,5-dimethylpyrazolyl)carbonylamino)ethyl methacrylate.

Examples of a polymer having a cationic polymerizable functional group include polymers having a structural unit derived from an epoxy group-containing vinylic monomer that has a polymerizable vinyl group (a group having an ethylenic unsaturated bond) and at least one epoxy group in one molecular.

Examples of an epoxy group-containing vinyl monomer include, for example, (meth)acrylic acid esters containing no hydroxyl group such as glycidyl (meth)acrylate, 4-hydroxybutyl (meth)acrylate glycidyl ether, 3,4-epoxycyclohexylmethyl (meth)acrylate, and α-(meth)acrylic-ω-glycidyl polyethylene glycol, (meth)acrylic acid esters containing a hydroxyl group such as glycerinmono(meth)acrylate glycidyl ether, aromatic monovinyl compounds such as vinylbenzyl glycidyl ether, allyl glycidyl ether, 3,4-epoxy-1-butene, or 3,4-epoxy-3-methyl-1-butene.

Among these, one kind or two or more kinds may be used singly or in combination. As the epoxy-group-containing vinyl monomer, (meth)acrylic acid esters containing an epoxy group and aromatic monovinyl compounds containing an epoxy group are preferable, the (meth)acrylic acid esters containing an epoxy group are more preferable, glycidyl (meth)acrylate, 4-hydroxybutyl (meth)acrylate glycidyl ether are more preferable, and the glycidyl (meth)acrylate is especially preferable.

Further, the polymer having a structural unit derived from an epoxy group-containing vinylic monomer may be a copolymer that contains a structural unit other than the epoxy group-containing vinylic monomer. Examples of the monomer other than the epoxy group-containing vinylic monomer include (meth)acrylic acid esters such as methyl (meth)acrylate, ethyl (meth)acrylate, butyl (meth)acrylate, cyclohexyl (meth)acrylate, and methoxyethyl (meth)acrylate, or (meth)acrylamides such as (meth)acrylamide, dimethyl(meth)acrylamide, (meth)acryloylmorpholine and diacetone(meth)acrylamide, and one kind or two or more kinds among these may be used singly or in combination.

Further, the weight-average molecular weight (Mw) of a polymer in terms of polystyrene, which is measured by gel permeation chromatography (GPC) is preferably from 5,000 to 200,000, inclusive, and more preferably from 10,000 to 100,000, inclusive. When the weight-average molecular weight (Mw) is less than 5,000, a resultant three-dimensional object obtained by shaping may not have high strength in some cases. When the weight-average molecular weight (Mw) is more than 200,000, it may be difficult to form the three-dimensional object due to increase in viscosity in some cases.

### <Polymerizable Monomers>

Next, the polymerizable monomer will be described. Examples of the polymerizable monomer include a radical polymerizable unsaturated compound and a cationic polymerizable compound although not being limited thereto.

### <Radical-Polymerizable Unsaturated Compounds>

The radical polymerizable unsaturated compound is to a polymerizable unsaturated compound capable of initiating polymerization with radical species, and examples of the compound include, for example, a carboxyl group-containing radically polymerizable unsaturated compound, a hydroxyl group-containing radically polymerizable unsaturated compound, a reactant of the hydroxyl group-containing radically polymerizable unsaturated compound and a lactone compound, a (meth) acrylic acid ester, a (meth)acrylic amide, and an alkoxysilyl group-containing radically polymerizable unsaturated compound.

Examples of the carboxyl group-containing radically polymerizable unsaturated compound include acrylic acid, methacrylic acid, crotonic acid, itaconic acids, maleic acid, fumaric acid, 2-carboxyethyl (meth)acrylate, 2-carboxypropyl (meth)acrylate, 5-carboxypentyl (meth)acrylate, and so on.

Examples of the hydroxyl group-containing radically polymerizable unsaturated compound include acrylic acid such as 2-hydroxyethyl(meth)acrylate, 3-hydroxypropyl(meth)acrylate, and 4-hydroxybutyl (meth)acrylate; C2 to C8 hydroxyalkyl esters of methacrylic acid; (poly)ethyleneglycolmono(meth)acrylate; polypropyleneglycolmono(meth)acrylate; polybutyleneglycolmono(meth)acrylate, and so on.

Examples of the reactant of the hydroxyl group-containing radically polymerizable unsaturated compound and the lactone compound include a reactant of the hydroxyl group-containing radically polymerizable unsaturated compound and the lactone compound such as β- propiolactone, dimethylpropiolactone, butyrolactone, γ-valerolactone, γ-caprolactone, γ-caprylolactone, γ-lauryrolactone, ε-caprolactone, and δ-caprolactone.

Examples of the (meth) acrylic acid ester include methyl (meth)acrylate, ethyl (meth)acrylate, propyl (meth)acrylate, butyl(meth) acrylate, hexyl (meth)acrylate, 2-etylhexyl (meth)acrylate, octyl (meth)acrylate, lauryl (meth)acrylate, cyclohexyl (meth)acrylate, isobornyl (meth)acrylate, polymethylmethacrylate(meth)acrylate, and polystyrene (meth)acrylate, and the like.

Examples of a vinyl aromatic compound include styrene, α-methylstyrene, vinyltoluene, ρ- chlorstyrene, vinylpyridine, and the like.

Examples of the (meth)acrylamide include N,N-dimethylacrylamide, diethylacrylamide, N-(2-hydroxyethyl)(meth)acrylamide, N-(2-hydroxypropyl(meth)acrylamide, N-(3-hydroxypropyl)(meth)acrylamide, N-methyl-N-(2-hydroxyethyl)(meth)acrylamide, N-ethyl-N-(2-hydroxyethyl)(meth)acrylamide, N-methyl-N-(2-hydroxypropyl)(meth)acrylamide, N-methyl-N(3-hydroxypropyl)(meth)acrylamide, N-ethyl-N-(2-hydroxypropyl)(meth)acrylamide, N-ethyl-N-(3-hydroxypropyl)(meth)acrylamide, N,N-di-(2-hydroxyethyl)(meth)acrylamide, N,N-di-(2-hydroxypropyl)(meth)acrylamide, and the like.

Examples of the alkoxysilyl group-containing radically polymerizable unsaturated compound include vinyltrimethoxysilane, vinylmethyldimethoxysilane, vinyldimethylmethoxysilane, vinyltriethoxysilane, vinylmethyldiethoxysilane, vinyldimethylethoxysilane, vinyltripropoxysilane, vinylmethyldipropoxysilane, vinyldimethylpropoxysilane, γ-(meth)acryloyloxypropyltrimethoxysilane, γ-(meth)acryloyloxypropylmethyldimethoxysilane, γ-(meth)acryloyloxypropyldimethylmethoxysilane, and the like.

As the examples of the radical polymerizable unsaturated compound, the compounds having one radically polymerizable unsaturated bond in one molecule have been exemplified. However, the radical polymerizable unsaturated compound is not specifically limited to these compounds, and a compound having two or more radically polymerizable unsaturated bond in one molecule may also be used. Specific examples of such a compound include divinylbenzene, ethylene glycol di(meth)acrylate, diethylene glycol di(meth)acrylate, triethylene glycol di(meth)acrylate, tetraethylene glycol di(meth)acrylate, polyethylene glycol diacrylate, 1,3-butylene glycol di(meth)acrylate, 1,4-butanediol diacrylate, glycerin di(meth)acrylate, glycerin tri(meth)acrylate, trimethylolpropane di(meth)acrylate, trimethylolpropane tri(meth)acrylate, pentaerythritol di(meth)acrylate, pentaerythritol tri(meth)acrylate, pentaerythritol tetra(meth)acrylate, dipentaerythritol penta(meth)acrylate, neopentyl glycol diacrylate, 1,6-hexanediol diacrylate, glycerol allyloxy di(meth)acrylate, 1,1,1-tris(hydroxymethyl)ethane di(meth)acrylate, 1,1,1-tris(hydroxymethyl)ethane tri(meth)acrylate, and the like.

### <Cationic Polymerizable Compounds>

The cationic polymerizable compound is a polymerizable compound capable of initiating polymerization with cationic species, and examples of the compound include, for example, an epoxy compound, an oxetane compound, a vinyl compound, and the like. Among these compounds, one kind or two or more kinds may be used singly or in combination.

As for the epoxy compound, either an aliphatic epoxy compound or a cycloaliphatic epoxy compound may be used. The aliphatic epoxy compound may be chosen as appropriate depending on the purpose without specific limitation, and a polyglycidyl ether of aliphatic polyhydric alcohol or its alkylene oxide adduct can be exemplified, for example. More specifically, examples of the epoxy compound include ethylene glycol diglycidyl ether, diethylene glycol diglycidyl ether, propylene glycol diglycidyl ether, tripropylene glycol diglycidyl ether, neopentyl glycol diglycidyl ether, 1,4-butane diol diglycidyl ether, 1,6-hexanedioldiglycidyl ether, trimethylolpropane triglycidyl ether, trimethylolpropane diglycidyl ether, polyethylene glycol diglycidyl ether, pentaerythritol tetraglycidyl ether, bisphenol A diglycidyl ether, bisphenol AD diglycidyl ether, bisphenol S diglycidyl ether, hydrogenated bisphenol A diglycidyl ether, bisphenol F diglycidyl ether, bisphenol G diglycidyl ether, tetramethyl bisphenol A diglycidyl ether, bisphenol hexafluoroacetone diglycidyl ether, bisphenol C diglycidyl ether, dibromomethylphenylglycidyl ether, dibromophenylglycidyl ether, bromo methylphenylglycidyl ether, bromophenylglycidyl ether, dibromometacresidyl glycidyl ether, dibromoneopentylglycol diglycidyl ether, and the like. Among these compounds, one kind or two or more kinds may be used singly or in combination.

Examples of commercially available aliphatic epoxy compounds include, for example, Epolight 100MF (trimethylolpropane triglycidyl ether) manufactured by Kyoeisha Chemical Co., Ltd., EX-411, EX-313, and EX-614B manufactured by Nagase Chemtex Corporation, and EIPOL E400 manufactured by NOF Corporation.

Examples of the cycloaliphatic epoxy compound include, for example, vinylcyclohexene monoxide, 1,2-epoxy-4-vinylcyclohexane, 1,2:8,9 diepoxylimonene, 3,4-epoxycyclohexenylmethyl, and 3',4'-epoxycyclohexene carboxylate. Among these compounds, one kind or two or more kinds may be used singly or in combination.

Examples of commercially available cycloaliphatic epoxy compounds include, for example, CEL2000, CEL3000, and CEL2021P manufactured by Daicel Chemical Industries, Ltd.

The oxetane compound is a compound having a 4-membered ring ether, i.e. an oxetane ring in a molecule.

The oxetane compound may be chosen as appropriate depending on the purpose without specific limitation, and examples of the compound include, for example, 3-ethyl-3-hydroxymethyl oxetane, 1,4-bis[{(3-ethyl-3-oxetanyl)methoxy}methyl] benzene, 3-ethyl-3-(phenoxymethyl)oxetane, bis(3-ethyl-3-oxetanylmethyl) ether, 3-ethyl-3-(2-ethylhexyloxymethyl) oxetane, 3-ethyl-3-[{(3-triethoxysilyl)propoxy}methyl] oxetane, oxetanyl silsesquioxane, phenolnovolac oxetane, and the like. Among these compounds, one kind or two or more kinds may be used singly or in combination.

Oxetanyl silsesquioxane is a silane compound having an oxetanyl group, and for example, a network-like polysiloxane compound having a plurality of oxetahyl groups, which can be obtained by hydrolytic condensation of 3-ethyl-3-[{(3-triethoxysilyl)propoxy}methyl]oxetane can be exemplified.

Any vinyl compound may be chosen as appropriate depending on the purpose without specific limitation as long as it is cationically polymerizable, and such vinyl compounds as styrene compounds and vinyl ether compounds can be exemplified. Among these, vinyl ether compounds are especially preferable in view of ease of cationic polymerization thereof. The styrene compound means styrene or a compound that has a structure in which a hydrogen molecule of an aromatic ring of styrene is replaced with an alkyl group, an alkyloxy group, or a halogen atom. Examples of the styrene compound include, for example, p-methylstyrene, m-methylstyrene, p-methoxystyrene, m-methoxystyrene, α-methyl-p-methoxystyrene, α-methyl-m-methoxystyrene, and the like. Among these compounds, one kind or two or more kinds may be used singly or in combination.

Examples of the vinyl ether compound include, for example, methyl vinyl ether, ethyl vinyl ether, propyl vinyl ether, isopropyl vinyl ether, butyl vinyl ether, isobuthyl vinyl ether, hexyl vinyl ether, cyclohexyl vinyl ether, methyl propenyl ether, ethyl propenyl ether, butyl propenyl ether, methyl butenyl ether, ethyl butenyl ether, and the like. Among these compounds, one kind or two or more kinds may be used singly or in combination.

### <Content of Polymerizable Monomer>

The content of a polymerizable monomer in the three-dimensional object shaping material is preferably 1 mass% or more and 95 mass% or less, more preferably 5 mass% or more and 90 mass% or less, furthermore preferably 10 mass% or more and 80 mass% or less, and particularly preferably 20 mass% or more and 70 mass% or less. If the content of the polymerizable monomer is less than 1 mass%, a three-dimensional object having sufficient flexibility may not be obtained in some cases. If the content of the polymerizable monomer exceeds 95 mass%, a three-dimensional object having sufficient mechanical strength may not be obtained in some cases.

The content of the polymerizable monomer is preferably 10 mass parts or more and 10,000 mass parts or less, more preferably 20 mass parts or more and 5,000 mass parts or less, furthermore preferably 50 mass parts or more and 3,000 mass parts or less, and particularly preferably 100 mass parts or more and 2,000 mass parts or less with respect to 100 mass parts of the polymer. If the content of the polymerizable monomer is less than 10 mass parts, a three-dimensional object having sufficient flexibility may not be obtained in some cases. If the content of the polymerizable monomer exceeds 10,000 mass parts, a three-dimensional object having sufficient mechanical strength may not be obtained in some cases.

### <Solvents>

The three-dimensional object shaping material may contain a solvent.

Examples of the solvent include, for example, alcohols such as methanol, ethanol, 1-propanol, 2-propanol, 1-butanol, 2-butanol, ethylene glycol, diethylene glycol, and propylene glycol; cyclic ethers such as tetrahydrofuran and dioxane; alkyl ethers of polyhydric alcohol such as ethylene glycol monomethyl ether, ethylene glycol monoethyl ether, ethylene glycol dimethyl ether, ethylene glycol diethyl ether, diethylene glycol monomethyl ether, diethylene glycol monoethyl ether, diethylene glycol dimethyl ether, diethylene glycol diethyl ether, diethylene glycol ethyl methyl ether, propylene glycol monomethyl ether, and propylene glycol monoethyl ether; alkyl ether acetates of polyhydric alcohol such as ethylene glycol ethyl ether acetate, diethylene glycol ethyl ether acetate, propylene glycol ethyl ether acetate, and propylene glycol monomethyl ether acetate; aromatic hydrocarbons such as toluene and xylene; ketones such as acetone, methyl ethyl ketone, methyl isobutyl ketone, cyclohexanone, 4-hydroxy-4-methyl-2-pentanone, and diacetone alcohol; esters such as ethyl acetate, butyl acetate, ethyl 2-hydroxypropionate, ethyl 2-hydroxy-2-methylpropionate, ethyl 2-hydroxy-2-methylpropionate, ethyl ethoxyacetate, ethyhydroxyacetate, methyl 2-hydroxy-3-methylbutanoate, methyl 3-methoxypropionate, ethyl 3-metoxypropionate, ethyl 3-ethoxypropionate, methyl 3-ethoxypropionate, ethyl acetate, and butyl acetate; aprotic polar solvents such as dimethylsulfoxide, diethylsulfoxide, acetonitrile, N-methyl-2-pyrrolidone, γ-butyrolactone, N,N-dimethylformamide, N,N-dimethylacetamide (DMAc), 1,3-dimethyl-2-imidazolidinone, sulfolane, dimethyl sulfone, diethyl sulfone, diisopropyl sulfone, diphenyl sulfone, diphenyl ether, benzophenone, dialkoxy benzene (carbon number of the alkoxy group: 1 to 4) and trialkoxy benzene (carbon number of the alkoxy group: 1 to 4); water; or ionic liquids.

The ionic liquid is composed of cationic and anionic components, having a melting point preferably of 200°C or lower, more preferably 100°C or lower, and furthermore preferably 50°C or lower. The lower limit of the melting point is not limited but is preferably -100°C or higher and more preferably -30°C or higher.

Specific examples of the cationic component include N-methylimidazolium cation, N-ethylimidazolium cation, 1,3-dimethylimidazolium cation, 1,3-diethylimidazolium cation, 1-ethyl-3-methylimidazolium cation, 1-propyl-3-methylimidazolium cation, 1-butyl-3-methylimidazolium cation, 1-hexyl-3-methylimidazolium cation, 1,2,3-trimethylimidazolium cation and 1,2,3,4-tetramethyimidazolium cation, 1-allyl-3-methylimidazolium cation, N-propylpyridinium cation, N-butylpyridinium cation, 1,4-dimethylpyridinium cation, 1-butyl-4-methylpyridinium cation and 1-butyl-2,4-dimethylpyridinium cation, trimethylammonium cation, ethyldimethylammonium cation, diethylmethylammonium cation, triethylammonium cation, tetramethylammonium cation, triethylmethylammonium cation, tetraethylammonium cation.

Specific examples of the anionic component include halide ions (such as Cl⁻, Br⁻, and I⁻), carboxylate anions (for example, such as C₂H₅CO₂-, CH₃CO₂-, and HCO₂-, of which the carbon number is 1 to 3 in total), pseudohalide ions (for example, such as CN⁻, SCN⁻, OCN⁻, ONC⁻, and N₃⁻ with univalent and halide-like properties), sulfonate anions, organic sulfonate anions (such as methanesulfonate anion), phosphate anions (such as ethylphosphate anion, methylphosphate anion, and hexafluorophosphate anion), borate anions (such as tetrafluoroborate anion), and perchlorate anion, and it is preferable to use halide ions or carboxylate anions.

Among the compounds mentioned above, alkyl ethers, alkyl ether acetates, ketones, esters, polar solvents such as water, and ionic liquids are preferably used as a solvent contained in the three-dimensional object shaping material in terms of usability, and formability of the three-dimensional object.

The content of the solvent in the three-dimensional object shaping material is preferably 1 mass% or more and 99 mass% or less, more preferably 5 mass% or more and 95 mass% or less, furthermore preferably 10 mass% or more and 90 mass% or less, and particularly preferably 20 mass% or more and 80 mass% or less, with respect to the entire three-dimensional object shaping material. When the content of the solvent is less than 1 mass%, a three-dimensional object having sufficient flexibility may not be obtained in some cases. When the content of the solvent exceeds 99 mass%, a three-dimensional object having sufficient mechanical strength may not be obtained in some cases.

Further, the content of the solvent is preferably 1 mass part or more and 10,000 mass parts or less, more preferably 5 mass parts or more and 5,000 mass parts or less, more preferably 10 mass parts or more and 1,000 mass parts or less, and particularly preferably 20 mass parts or more and 400 mass parts or less, with respect to 100 mass parts of the polymer and polymerizable monomer in total. When the content of the solvent is less than 1 mass part, a three-dimensional object having sufficient flexibility may not be obtained in some cases. When the content of the solvent exceeds 10,000 mass parts, a three-dimensional object having sufficient mechanical strength may not be obtained in some cases.

### <Photo-Radical Generators and Photoacid Generators>

When the three-dimensional object shaping material contains a polymerizable monomer such as a radical-polymerizable unsaturated compound or a cationic-polymerizable compound, the three-dimensional object shaping material preferably contains at least one selected from a photo-radical generator and a photoacid generator in order to obtain a three-dimensional object that is excellent in strength. Note that the use of a photo-radical generator or a photoacid generator allows a polymerizable monomer in the three-dimensional object shaping material to polymerize when the three-dimensional object shaping material is irradiated with light.

The photo-radical generator is a compound that generates radicals capable of initiating polymerization of the polymerizable monomer mentioned above upon exposure to a radiation ray such as a visible light ray, ultraviolet rays, far-ultraviolet rays, electron rays, or X-rays.

Examples of such photo-radical generators include well-known compounds, for example, thioxanthone compounds, acetophenone compounds, biimidazole compounds, triazine compounds, O-acyloxime compounds, benzoin compounds, benzophenone compounds, α-diketone compounds, polynuclear quinone compounds, xanthone compounds, phosphine compounds.

Among preferable photo-radical generators, specific examples of the thioxanthone compounds include 2-methylthioxanthone, 2-isopropylthioxanthone, 4-isopropylthioxanthone, and 2,4-diethylthioxanthone.

Specific examples of the acetophenone compounds include 2-methyl-1-[4-(methylthio)phenyl]-2-morpholinopropan-1-one, 2-benzil-2-dymethylamino-1-(4-morpholinophenyl)butan-1-one, 2-(4-methylbenzil)-2-(dimethylamino)-1-(4-morpholinophenyl)butan-1-one, and (1-hydroxycyclohexyl)phenylmethanone.

Specific examples of the biimidazole compounds include 2,2'-bis(2-chlorophenyl)-4,4', 5,5'-tetraphenyl-1,2'-biimidazol, 2,2'-bis(2,4-dichlorophenyl)-4,4', 5,5'-tetraphenyl-1,2'-biimidazol, 2,2'-bis(2,4,6-trichlorophenyl)-4,4', and 5,5'-tetraphenyl-1,2'-biimidazole.

Specific examples of the triazine compounds include 2,4,6-tris(trichloromethyl)-s-triazine, 2-methyl-4,6-bis(trichloromethyl)-s-triazine, 2-[2-(5- methylfuran-2-yl)ethenyl]-4,6-bis(trichloromethyl)-s-triazine, and 2-[2-(furan-2-yl)ethenyl]-4,6-bis(trichloromethyl)-s-triazine.

Specific examples of the O-acyloxime compounds include 1,2-octanedione, 1-[4-(phenylthio)phenyl]-, 2-(O-benzoyloxime); ethanone, 1-[9-ethyl-6-(2-methylbenzoyl)-9H-carbazol-3-yl]-, 1-(O-acetyloxime); and ethanone, 1-[9-ethyl-6-(2-methyl-4- tetrahydrofuranylmethoxybenzoyl)-9H-carbazol-3-yl]-, 1-(O-acetyloxime).

Specific examples of the α-diketone compounds include α- ketoglutarate, and the like.

Examples of the phosphine compounds include diphenyl-2,4,6-trimethylbenzoyl phosphine oxide, and the like.

The photo-radical generator may be used singly or in mixture of two or more kinds. The photo-radical generator in the present invention preferably contains at least one kind selected from the group consisting of thioxanthone compounds, acetophenone compounds, biimidazole compounds, triazine compounds, O-acyloxyme compounds, α-diketone compounds, and phosphine compounds.

The photoacid generator is a compound that generates acid capable of initiating polymerization of the polymerizable monomer mentioned above upon exposure to a radiation ray such as a visible light ray, ultraviolet rays, far-ultraviolet rays, electron rays, or X-rays.

Examples of such photoacid generators include well-known compounds, for example, onium salt compounds, sulfone compounds, sulfonate ester compounds, quinone diazide compounds, sulfoneimide compounds, and diazomethane compounds. The triazine compounds exemplified as an example of the photo-radical generators function also as a photoacid generator.

Among preferable photoacid generators, examples of the onium salt compounds include diaryliodonium salt, triarylsulfonium salt, triarylphosphonium salt, and the like.

Specific examples of the diaryliodonium salt include diphenyliodonium tetrafluoroborate, diphenyliodonium hexafluorophosphate, diphenyliodonium hexafluoroantimonate, diphenyliodonium hexafluoroarsenate, diphenyliodonium trifluoromethanesulfonate, diphenyliodonium trifluoroacetate, diphenyliodonium-p-toluenesulfonate, and the like.

Specific examples of the triarylsulfonium salt include triphenylsulfonium tetrafluoroborate, triphenylsulfonium hexafluorophosphonate, triphenylsulfonium hexafluoroantimonate, triphenylsulfonium hexafluoroarsenate, triphenylsulfonium trifluoromethanesulfonate, triphenylsulfonium trifluoroacetate, triphenylsulfonium-p-toluenesulfonate, and the like.

Specific examples of the triarylphosphonium salt include triphenyphosphonium tetrafluoroborate, triphenyphosphonium hexafluorophosphonate, triphenylphosphonium hexafluoroantimonate, triphenylphosphonium hexafluoroarsenate, triphenyphosphonium trifluoromethanesulfonate, triphenyphosphonium trifluoroacetate, triphenyphosphonium-p-toluenesulfonate, and the like.

Specific examples of the sulfoneimide compounds include N-(trifluoromethylsulfonyloxy)succinimide, N-(trifluoromethylsulfonyloxy)phthalimide, N-(trifluoromethylsulfonyloxy)diphenylmaleimide, N-(trifluoromethylsulfonyloxy)bicyclo-[2,2,1]-hept-5-ene-2,3-dicarboximide, N-(trifluoromethylsulfonyloxy)-7-oxabicyclo-[2,2,1]-hept-5-ene-2,3-dicarboximide, N-(trifluoromethylsulfonyloxy)bicyclo-[2,2,1]-heptane-5,6-oxy-2,3-dicarboximide, and the like.

Examples of the diazomethane compounds include bis(trifluoromethylsulfonyl)diazomethane, bis(cyclohexylsulfonyl)diazomethane, bis(phenylsulfonyl)diazomethane, bis(p-toluenesulfonyl)diazomethane, methylsulfonyl-p-toluensulfonyl diazomethane, 1-cyclohexylsulfonyl-1-(1,1-dimethylethylsulfonyl)diazomethane, bis(1,1-dimethylethylsulfonyl)diazonemhane, and the like.

In the present invention, the photoacid generator may be used singly or in mixture of two or more kinds. The photoacid generator in the present invention preferably contains at least one kind selected from the group consisting of onium salt compounds, sulfoneimide compounds, and diazomethane compounds and particularly preferably contains an onium salt compound.

The content of the photo-radical generator is not particularly limited but is usually 0.01 mass% or more and 10 weight% or less, and preferably 0.05 mass% or more and 5 weight% or less with respect to the total mass of the polymer and the polymerizable monomer.

The content of the photoacid generator is not particularly limited but is usually 0.01 mass% or more and 10 weight% or less, and preferably 0.05 mass% or more and 5 weight% or less with respect to the total mass of the polymer and the polymerizable monomer.

### <Other Components>

Three-dimensional object shaping materials used in the present invention may contain an additive(s) such as a coloring agent, a filler, a plasticizer, a stabilizer, a coloring agent, an antiaging agent, an antioxidant, an antistatic agent, a weather-proofer, an ultraviolet absorber, an antiblocking agent, a crystal nucleating agent, a flame-retardant agent, a vulcanizing agent, a vulcanization aid, an antibacterial/antifungal agent, a dispersant, a coloring protection agent, a foaming agent, and a rust preventive in order to add any function in accordance with a purpose(s) as along as advantageous effects of the present invention are not impaired.

When a three-dimensional object of the present invention is used as a biological organ model, the three-dimensional object is preferably colored in a desired color with a coloring agent to resemble the biological organ model.

Although the contents of the additives may differ from each other so as to impart intended functions, it is desirable for the contents to be in the range capable of maintaining the fluidity of the three-dimensional object.

The content of the additive(s) is preferably 0.01 mass% or more and 50 mass% or less, more preferably 0.1 mass% or more and 40 mass% or less, and particularly preferably 1 mass% or more and 30 mass% or less with respect to 100 mass% of the three-dimensional object shaping material. In order to impart the intended functions to the three-dimensional object shaping material, the content is preferably 1 mass% or more in particular, while in order to maintain the fluidity and ensure the formability of the three-dimensional object shaping material, the content is preferably 30 mass% or less in particular.

### <Physical Properties of Three-Dimensional Object Shaping Materials>

The viscosity of the three-dimensional object shaping material at the time of being ejected from the nozzle is not limited, but is preferably 1000 Poise or less, and more preferably 100 Poise or less.

As illustrated in Figures 1 to 5, the outer shell material portion shaping material 20 and the inner core material portion shaping material 30, of which the content ratios of the polymer and the polymerizable monomer are different from each other, may be used. The hardness of the outer shell 2 formed by solidification of the outer shell material portion 21 made of the outer shell material portion shaping material 20 can be made higher than the hardness of the inner core 3 formed by solidification of the inner core material portion 31 made of the inner core material portion shaping material 30. In order that the outer shell 2 has a hardness higher than that of the inner core 3, for example, the content of the polymer and the polymerizable monomer in the entire outer shell material portion shaping material 20 may be made larger than the content of the polymer and the polymerizable monomer in the entire inner core material portion shaping material 30. Further, in order that the outer shell 2 has a hardness higher than that of the inner core 3, the content of the solvent in the entire outer shell material portion shaping material 20 may be made smaller than the content of the solvent in the entire inner core material portion shaping material 30.

### <Method for Manufacturing Three-Dimensional Object>

Next, the method for manufacturing the three-dimensional object 1 will be described in detail with reference to Figures 1 to 8.

The positions of the outer shell nozzle 5A and the inner core nozzle 5B in the manufacturing apparatus 10 of the present embodiment are fixed, and the stage 6 is moved in the planar directions X and Y relative to the nozzles 5A and 5B so as to form the outer shell material portion 21 and the inner core material portion 31 in a plane shape by one layer on the stage 6, then the stage 6 is lowered in the height direction Z by one layer so as to form the outer shell material portion 21 and the inner core material portion 31 in a plane shape further by one layer on the stage 6, thereby forming the outer shell 2 and the inner core 3 layer sequentially.

In order to simplify the description, the three-dimensional object 1 is to be formed into a square pole shape in the present embodiment. The three-dimensional object 1 may also be formed into various other shapes having the inner core 3 in a region inside the outer shell 2.

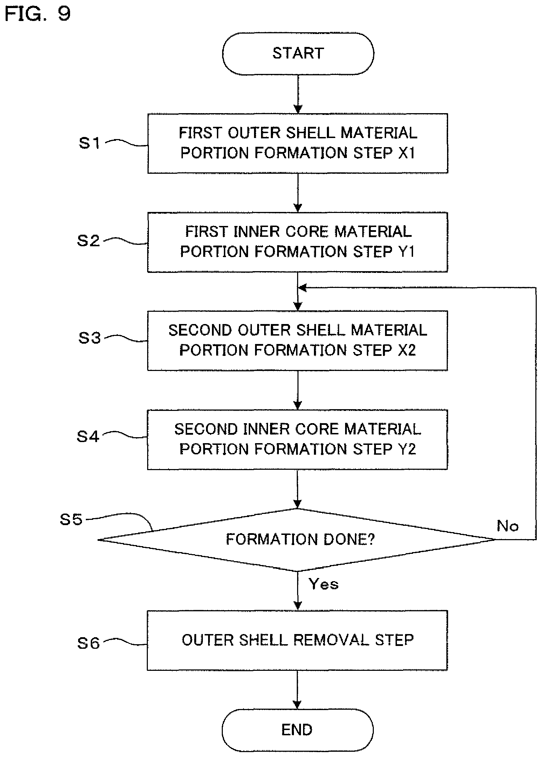

First, as illustsrated in Figure 1 and a step S1 of Figure 9, in the first outer shell material portion formation step X1, the stage 6 is moved relative to the outer shell nozzle 5A in a plane while the outer shell material portion shaping material 20 of hard nature is ejected from the outer shell a nozzle 5A onto the stage 6 so as to form a first-layer outer shell material portion 21A that constitutes a part of the outer shell 2 of the three-dimensional object 1 to be formed, as a bottom part 211 of the three-dimensional object 1. The outer shell material portion shaping material 20 ejected from the outer shell nozzle 5A is irradiated with the light H by the light irradiation device 100 to be solidified. Note that the light irradiation device 100 continuously irradiates the entire outer shell material portion shaping material 20 ejected from outer shell nozzle 5A and the entire inner core material portion shaping material 30 ejected from the inner core nozzle 5B with the light H during forming the three-dimensional object 1.

After the first-layer outer shell material portion 21A has been formed, the stage 6 is moved relative to the outer shell nozzle 5A in a plane while the outer shell material portion shaping material 20 is ejected from the outer shell nozzle 5A, as illustrated in Fig. 2. Thus, a second-layer outer shell material portion 21B composed of the outer shell material portion shaping material 20 is formed on the periphery of the first-layer outer shell material portion 21A over the circumference, and the outer shell material portion shaping material 20 is also solidified under irradiation with the light H by the light irradiation device 100.

Then, as illustrated in Figure 3 and a step S2 of Figure 9, in the first inner core material portion formation step Y1, the stage 6 is moved relative to the inner core nozzle 5B in a plane while an inner core material portion shaping material 30 of soft nature is ejected from the inner core nozzle 5B to an inner region surrounded by the second-layer outer shell material portion 21B. At this time, the inner core material portion shaping material 30 is ejected so as to fill the entire inner region surrounded by the second-layer outer shell material portion 21B. Thus, a first layer inner core material portion 31A composed of the inner core material portion shaping material 30 is formed in the region inside the second-layer outer shell material portion 21B, and the inner core material portion shaping material 30 is also solidified under irradiation with the light H by the light irradiation device 100.

Then, as illustrated in Figure 4 and a step S3 of Figure 9, in the second outer shell material portion formation step X2, the stage 6 is moved relative to the outer shell nozzle 5A in a plane while the outer shell material portion shaping material 20 is ejected from the outer shell nozzle 5A onto the first-layer outer shell material portion 21B. Thus, a third-layer outer shell material portion 21C composed of the outer shell material portion shaping material 20 is formed on the second-layer outer shell material portion 21B, and the outer shell material portion shaping material 20 is also solidified under irradiation with the light H from the light irradiation device 100.

Then, as illustrated in Figure 5 and a step S4 of Figure 9, in the second inner core material portion formation step Y2, the stage 6 is moved relative to the inner core nozzle 5B in a plane while the inner core material portion shaping material 30 is ejected from the inner core nozzle 5B to an inner region surrounded by the third-layer outer shell material portion 21C. At this time, the inner core material portion shaping material 30 is ejected so as to fill the entire inner region surrounded by the third-layer outer shell material portion 21C. Thus, the second-layer inner core material portion 31B composed of the inner core material portion shaping material 30 is formed in the inner region inside the third-layer outer shell material portion 21C, and the inner core material portion shaping material 30 is also solidified under irradiation with the light H from the light irradiation device 100.

In this way, the second outer shell material portion formation step X2 and the second inner core material portion formation step Y2 are repeated at the number of times in accordance with the height of the three-dimensional object 1, thereby forming the three-dimensional object 1 having the outer shell 2 formed from the outer shell material portion 21 in a form of a plurality of accumulated layers and the inner core 3 formed from the inner core material portion 31 in a form of a plurality of accumulated layers, as illustrated in a step S5 of Figure 9.

Further, in the present embodiment, as illustrated in Figure 6 and a step S7 of Figure 9, after the three-dimensional object 1 including the outer shell 2 and the inner core 3 has been formed and the outer shell 2 and the inner core 3 have been entirely solidified, the step of removing the outer shell 2 from the three-dimensional object 1 is performed. The outer shell 2 to be removed is represented by chain double-dashed lines in Figure 6. The removal of the outer shell 2 can be performed in various ways such as peeling, scraping, and so on. Thus, the three-dimensional object 1 as a final product is constituted only by the inner core 3 formed of the inner core material portion shaping material 30.

Alternatively, in order to shape the three-dimensional object 1 as a final product so as to have the outer shell 2 and the inner core 3, the outer shell material portion 21 that constitutes a ceiling may be formed in the step of lastly forming the outer shell material portion 21, so that the inner core 3 is entirely embraced by the outer shell 2.

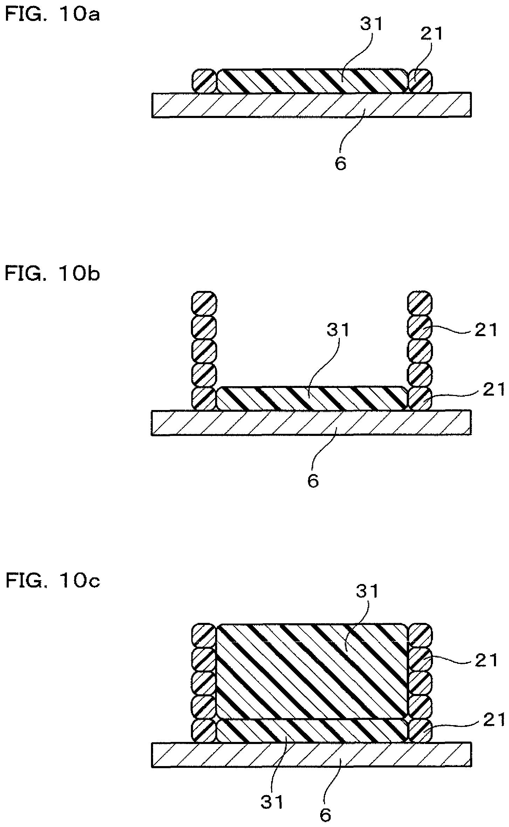

The present embodiment shows the case in which the second outer shell material portion formation step X2 and the second inner core material portion formation step Y2 are repeatedly performed sequentially. In other words, for example, the first shell wall part formation step X1 and the first inner core material portion formation step Y1 may be performed as illustrated in Fig. 10(a), the second outer shell material portion formation step X2 may be repeated a number of times as illustrated in Fig. 10(b), and then the second inner core material portion formation step Y2 may be performed only once as illustrated in Fig. 10(c). In this case, the three-dimensional object 1 including the outer shell 2 formed from the outer shell material portion 21 in a form of a plurality of accumulated layers and the inner core 3 formed from the inner core material portion 31 can be formed.

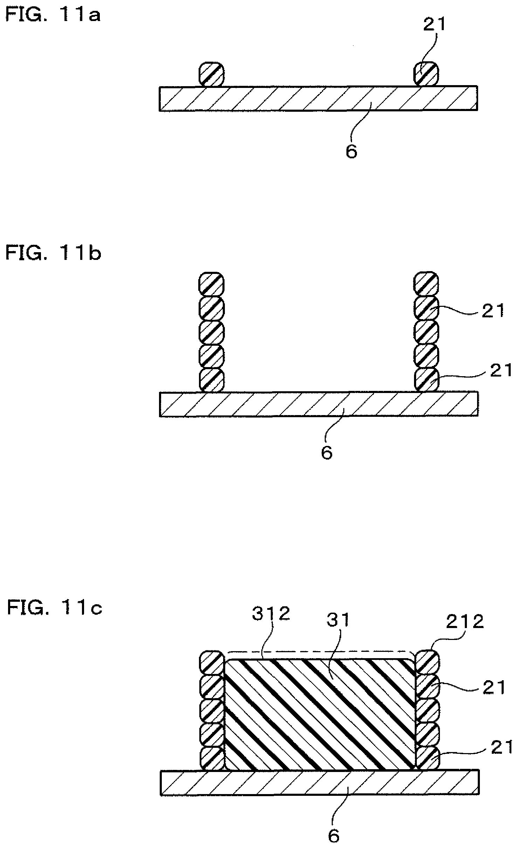

In addition to the aforementioned configurations, for example, the first outer shell material portion formation step X1 may be performed as illustrated in Figure 11(a), the second outer shell material portion formation step X2 may be repeatedly performed a number of times as illustrated in Figure 11(b), and then the first inner core material portion formation step Y1 may be performed as illustrated in Figure 11(c) to thereby form the inner core material portion 31 in the entire inner region surrounded by the outer shell material portion 21 in a form of a plurality of accumulated layers. In this case, the inner core material portion 31 can be formed not only to have the same height as that of the outer shell material portion 21, but also to have a height lower than that of the outer shell material portion 21 within the range of the height of one layer of the outer shell material portion 21 (as indicated by a chain double-dashed line in Figure 11(c)).

When shaping the three-dimensional object 1 in such a way that the height of the inner core material portion 31 thus formed (corresponding to an upper surface position 312 of the inner core material portion 31) is lower than the height of the outer shell material portion 21 (corresponding to an upper surface position 212 of the outer shell material portion 21) as illustrated in Figure 11(c), the outer shell can be easily removed from the three-dimensional object 1 after forming. Such a design that the height of the inner core material portion 31 after forming is made higher than that of the outer shell material portion 21 can be also utilized in the embodiment described above.

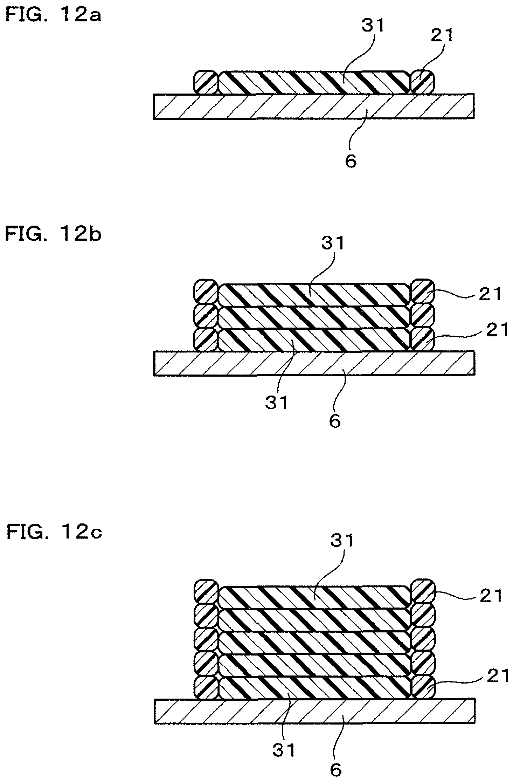

In addition, after the first outer shell material portion formation step X1 and the first inner core material portion formation step Y1 have been performed as illustrated in in Figure 12(a), the second outer shell material portion formation step X2 and the second inner core material portion formation step Y2 may be alternately performed as illustrated in Figures 12(b) and 12(c), each step being repeated a plurality of time at a time.

In this case, the inner core material portion 31 can be accumulated sequentially in such a way that the formation height of each inner core material portion 31 after forming is slightly lower than that of each outer shell material portion 21.

The three-dimensional object 1 thus obtained is excellent in flexibility and mechanical strength and can be suitably used as human or animal biological organ models for use in medical simulations, medical instrument parts such as mouth inhalation pads and arthrodesis devices, biomaterials such as prosthetic joints, cell culture sheets, soft contact lenses, drug delivery systems, medical materials such as wound dressings, flexible parts for room and automotive interiors, various shock absorbing/dumping materials, and the like

The hardness of the three-dimensional object 1 is not particularly limited and the hardness (Duro-00) may be, for example, 0 or more and 100 or less. The hardness is measured by a measuring method described in an example mentioned below.

The breaking strength of the three-dimensional object 1 is not particularly limited and may be, for example, 0.01 MPa or more and 20.0 MPa or less. The breaking strength is measured by a measuring method described in an example mentioned below.

The breaking elongation of the three-dimensional object 1 is not particularly limited and may be, for example, 10% or more and 2,000% or less. The breaking elongation is measured by a measuring method described in an example mentioned below.

The tensile modulus of the three-dimensional object 1 is not particularly limited and may be, for example, 0.01 N/m² or more and 10 N/m² or less. The tensile modulus is measured by a measuring method described in an example mentioned below.

### <Operational Effects of Method for Manufacturing Three-Dimensional Object>

Next, the operational effects of the method for manufacturing the three-dimensional object 1 will be described.

When the inner core material portion formation steps Y1 and Y2 are performed in the method for manufacturing the three-dimensional object 1, the inner core material portion shaping material 30 ejected from the inner core nozzle 5B onto the stage 6 can be supported by the outer shell material portion 21 formed of the outer shell material portion shaping material 20. Therefore, the inner core material portion shaping material 30 ejected onto the stage 6 can be inhibited from flowing or deforming and the shaping precision and speed of the inner core 3 formed from the inner core material portion shaping material 30 can be improved.

Further, because the outer shell material portion 21 is formed of the outer shell material portion shaping material 20 ejected from the outer shell nozzle 5A, and the inner core material portion 31 is formed of the inner core material portion shaping material 30 ejected from the inner core nozzle 5B, the outer shell material portion 21 and the inner core material portion 31 can be alternately formed easily. Because the outer shell material portion 21 and the inner core material portion 31 are repeatedly formed sequentially, the shaping speed of the three-dimensional object 1 having the outer shell 2 and the inner core 3 can be improved.

Moreover, in the present embodiment, after the three-dimensional object 1 having the outer shell 2 and the inner core 3 has been formed once, the outer shell 2 is removed as an unnecessary part. Accordingly, in the case of using a soft material as the inner core material portion shaping material 30, the three-dimensional object 1 that would otherwise be difficult to be formed because the material is too soft can be easily formed.

Therefore, according to the method for manufacturing a three-dimensional object 1 in the present embodiment, the shaping precision and speed can be improved even when the three-dimensional object 1 has a soft portion.

### (Second Embodiment)

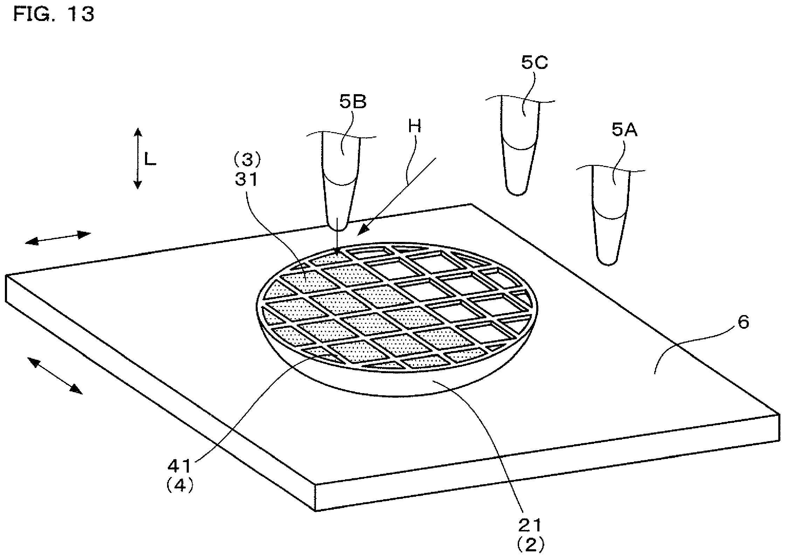

In the present embodiment, the three-dimensional object 1 that has the outer shell 2 formed from the outer shell material portion 21 in a form of a plurality of accumulated layers, a rib 4 formed from a rib material portion 41 in a form of a plurality of accumulated layers, and the inner core 3 formed from the inner core material portion 31 in a form of a plurality of accumulated layers is formed as illustrated in Figure 13. The rib 4 is a bony part to be embedded in the inner core 3 and is formed into a lattice shape opened in an accumulation direction L of the rib material portion 41 in a form of accumulated layers. Other than the lattice shape, the rib 4 may be formed into a honeycomb shape having openings in the accumulation direction L of the rib material portions 41 in a form of accumulated layers or various polygonal shapes.

The step of forming the rib material portion 41 is performed after the step of forming the outer shell material portion 21 and prior to the step of forming the inner core material portion 31. The manufacturing apparatus 10 of the present embodiment includes a rib nozzle 5C for ejecting a rib material portion shaping material 40.

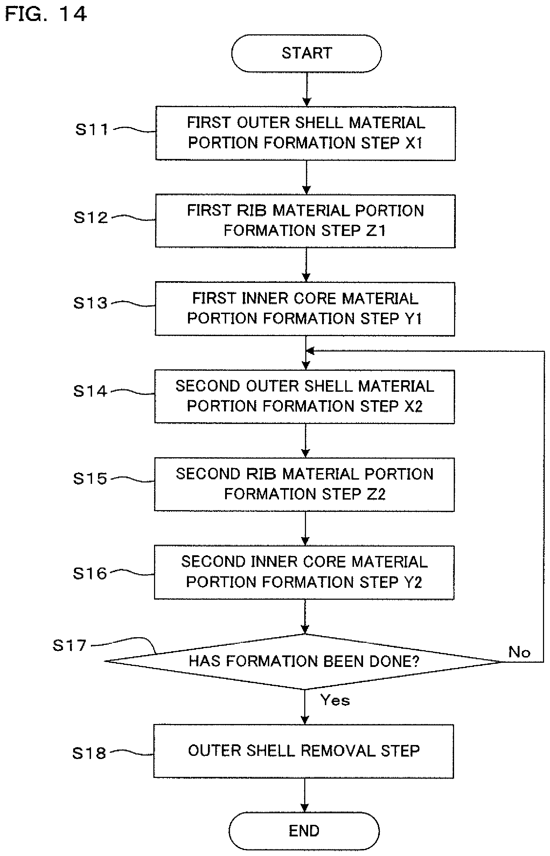

As illustrated in a flowchart in Figure 14, after the first outer shell material portion formation step X1 (Step S11) and prior to the first inner core material portion formation step Y1 (Step S13) illustrated in the first embodiment, a first rib material portion formation step Z1 (S12) is performed, in which the stage 6 is moved in a plane relative to the rib nozzle 5C while the rib material portion shaping material 40 is ejected from the rib nozzle 5C onto the bottom part 211 formed by the first-layer outer shell material portion 21A. Thus, the first-layer rib material portion 41 is formed of the rib material portion shaping material 40 on the bottom part 211 of the first-layer outer shell material portion 21A and the rib material portion shaping material 40 is solidified under irradiation with the light H by the light irradiation device 100.

After the second outer shell material portion formation step X2 (S14) and prior to the second inner core material portion formation step Y2 (S16) illustrated in the first embodiment, a second rib material portion formation step Z2 (S15) is performed, in which the stage 6 is moved in a plane relative to the rib nozzle 5C while the rib material portion shaping material 40 is ejected from the rib nozzle 5C onto the rib material portion 41. Thus, a second-layer rib material portion 41 is formed of the rib material portion shaping material 40 on the first-layer rib material portion 41 and the rib material portion shaping material 40 is solidified under irradiation with the light H from the light irradiation device 100.

In this way, the second outer shell material portion formation step X2, the second rib material portion formation step Z2 and the second inner core material portion formation step Y2 are repeated at the number of time in accordance with the height of the three-dimensional object 1, thereby forming the three-dimensional object 1 having the outer shell 2 formed from the outer shell material portion 21 in a form of a plurality of accumulated layers, the rib 4 formed from the rib material portions 41 in a form of a plurality of accumulated layers, and the inner core 3 formed from the inner core material portions 31 in a form of a plurality of accumulated layers, as illustrated in a step S17 of Figure 14.

Further, in the present embodiment, as illustrated in a step S18 of Fig. 14, after the three-dimensional object 1 including the outer shell 2, the rib 4 and the inner core 3 has been formed and the outer shell 2, the rib 4 and the inner core 3 have been entirely solidified, a step of removing the outer shell 2 from the three-dimensional object 1 is performed. Thus, the three-dimensional object 1 obtained as a final product is constituted by the inner core 3 formed from the inner core material portion shaping material 30 and the rib 4 formed from the rib material portion shaping material 40 and embedded in the inner core 3.

In the present embodiment, the rib material portion shaping material 40 that forms the rib 4 and the outer shell material portion shaping material 20 that forms the outer shell 2 have different compositions. The rib material portion shaping material 40 that forms the rib 4 may be softer or harder than the outer shell material portion shaping material 20 that forms the outer shell 2. The hardness of the rib 4 formed by solidification of the rib material portions 41 is higher than that of the inner core 3 formed by solidification of the inner core material portion 31.

Further, when the composition of the rib material portion shaping material 40 for forming the rib 4 and the composition of the three-dimensional object shaping material 20 for forming the outer shell 2 are made the same, the rib material portion shaping material 40 for forming the rib 4 may be ejected using the outer shell nozzle 5A in the rib material portion formation steps Z1 and Z2 without using the rib nozzle 5C.

When the inner core material portion formation steps Y1 and Y2 are performed in the method for manufacturing the three-dimensional object 1, the inner core material portion shaping material 30 ejected from the inner core nozzle 5B onto the stage 6 can be supported by the outer shell material portion 21 formed of the outer shell material portion shaping material 20 and the rib material portion 41 formed of the rib material portion shaping material 40. Therefore, the inner core material portion shaping material 30 ejected onto the stage 6 can be inhibited from flowing or deforming and the shaping precision and speed of the inner core 3 formed from the inner core material portion shaping material 30 can be improved.

Because the outer shell material portion 21, the rib material portion 41 and the inner core material portion 31 are repeatedly formed sequentially, the shaping speed of the three-dimensional object 1 including the outer shell 2, the rib 4 and the inner core 3 can be improved.

Moreover, in the present embodiment, after the three-dimensional object 1 including the outer shell 2, the rib 4 and inner core 3 has been formed once, the outer shell 2 is removed as an unnecessary part. In the three-dimensional object 1 as a final product, an outline shape of the inner core 3 composed of the inner core material portion shaping material 30 can be kept by the rib 4 composed of the rib material portion shaping material 40. Accordingly, if the three-dimensional object 1 is excessively soft because the inner core 3 is composed of the inner core material portion shaping material 30 of soft nature, the rib 4 of hard nature can provide adequate hardness to the three-dimensional object 1.

According to the method for manufacturing the three-dimensional object 1 of the present embodiment, the shaping precision and speed of the three-dimensional object 1 formed from the inner core material portion shaping material 30 and the rib material portion shaping material 40 can be improved. Further, also in the present embodiment, other configurations and components indicated by signs in the drawings are the same as those in the first embodiment, the same operational effects as in the first embodiment can be exhibited.

### (Third Embodiment)

In the present embodiment, a method for preparing data for nozzle movement paths and a program for preparing the data which are used in the method for manufacturing the three-dimensional object 1 and the apparatus 10 for manufacturing the three-dimensional object 1 described in the first and second embodiments in order to move the outer shell nozzle 5A and the inner core nozzle 5B relative to the stage 6, will be described. The data for the nozzle movement path is, as illustrated in Fig. 7, prepared by a design computer 80 and then sent to a control computer 8 to be used in shaping the three-dimensional object 1.

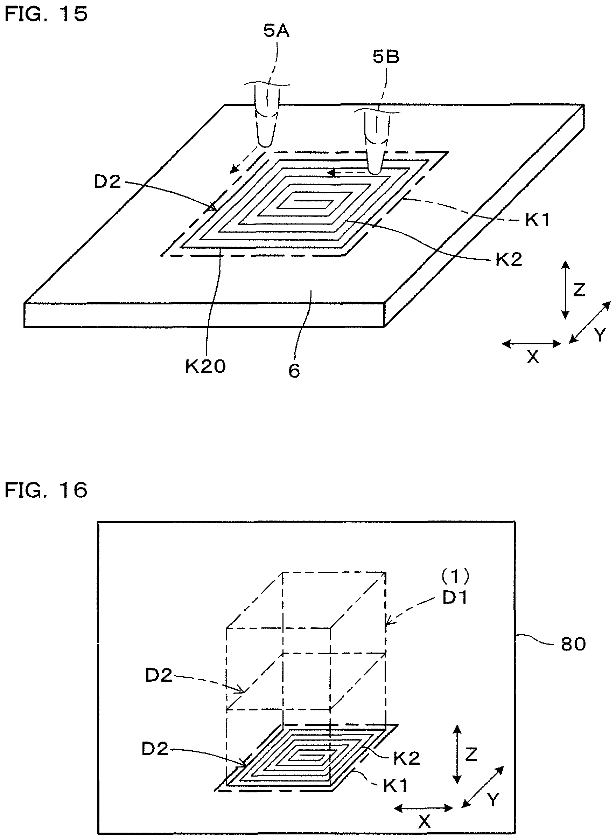

As illustrated in Figure 15, the data for the nozzle movement paths is set in the control computer 8, and specifically is prepared as data for the movement paths to be used when the outer shell nozzle 5A and the inner core nozzle 5B are moved relative to the stage 6. The data for the movement paths is prepared by the design computer 80 as a control code (G code) to be used by the control computer 8. Further, the data for the movement paths in the present embodiment is prepared as data for a movement path K1 for an outer shell material portion as a nozzle movement path for the outer shell material portion for use in moving the outer shell nozzle 5A relative to the stage 6 and a movement path K2 for an inner core material portion as a nozzle movement path for the inner core material portion for use in moving the inner core nozzle 5B relative to the stage 6. Note that the data for the movement path K1 for the outer core material portion represents data for the movement path of the outer shell nozzle 5A and the data for the movement path K2 for the inner core material portion represents data for the movement path of the inner core nozzle 5B.

As illustrated in Fig. 16, in order to prepare the data for nozzle movement path, three-dimensional surface data D1 of the three-dimensional object 1 to be shaped is prepared first by designing or capturing. The three-dimensional object 1 to be formed from various shaping materials such as a resin and the like, may have a three-dimensional shape, for example, artificially designed in the design computer 80. Alternatively, the three-dimensional object 1 may have a three-dimensional shape of natural objects such as organisms or various master models captured with a camera, a scanner or the like and read into the design computer 80.

Then, the three-dimensional surface data D1 is read into 3D-CAD software called a slicer or the like in the design computer 80 to process in the software. Specifically, the three-dimensional surface data D1 is processed into contour layer data D2 in the form of a line by slicing the three-dimensional surface data D1 at regular intervals in the height direction Z in the software, the contour layer data D2 being accumulated in plural layers in the height direction Z. The height direction Z referred to here is the direction in which the outer shell material portion shaping material 20 as a shaping material for forming the outer shell material portion and an inner core material portion shaping material 30 as a shaping material for forming the inner core material portion are accumulated on the stage 6. The contour layer data D2 constitutes two-dimensional-shape data at each cross-section obtained by dividing the three-dimensional surface data D1 into pieces in the height direction Z.

The contour layer data D2 in the present embodiment has a form of accumulated layers in the height direction Z as a predetermined direction. The predetermined direction of the contour layer data D2 in the form of accumulated layers may be inclined with respect to the height direction Z.

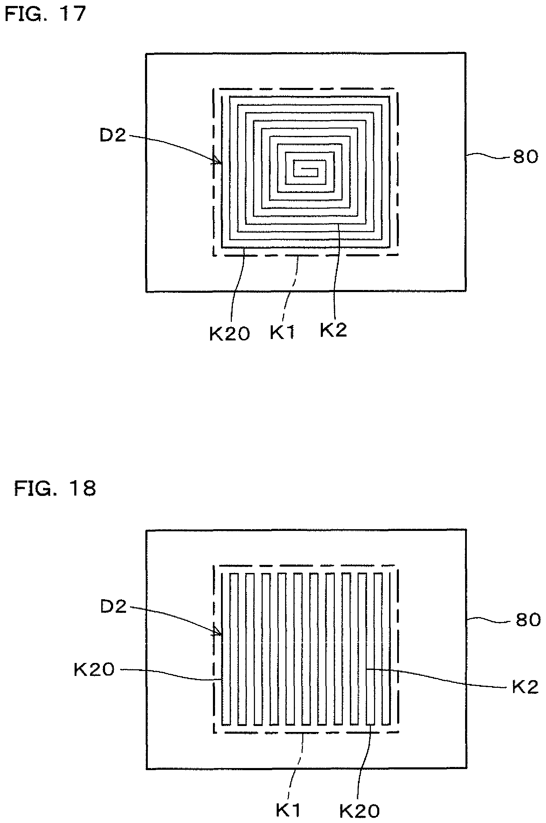

Then, as illustrated in Fig. 17, data for the movement path K2 for the inner core material portion to eject the inner core material portion shaping material 30 from the inner core nozzle 5B is prepared on the basis of the contour layer data D2. The data for the movement path K2 for the inner core material portion is used to move the inner core nozzle 5B relative to the stage 6 in forming an inner core material portion 31. In this configuration, the outline of the inner core material portion 31 to be formed is set to be located at a position indicated by the contour layer data D2, taking into account the diameter or the outline of the cross section of the inner core material portion shaping material 30 when ejected from the inner core nozzle 5B. The inner core material portion shaping material 30 is not necessarily required to be ejected from the inner core nozzle 5B in a circular cross section and may be ejected variously in its cross section. The same applies to the outer shell material portion shaping material 20.

The data thus prepared for the movement path K2 for the inner core material portion is used for position control in the control code in the control computer 8. The data for the movement path K2 for the inner core material portion is used to determine positions to which the inner core material portion shaping material 30 is ejected from the inner core nozzle 5B moving relative to the stage 6 when the control computer 8 controls operations of the inner core nozzle 5B and the relative movement mechanism 7. Further, the data for the movement path K2 for the inner core material portion is prepared in plural pieces corresponding to each contour layer data D2 prepared in plural pieces.

Then, as illustrated in Fig. 17, data for the movement path K1 for the outer shell material portion to eject the outer shell material portion shaping material 20 from the outer shell nozzle 5A is prepared using the data for the movement path K2 for the inner core material portion. The data for the movement path K1 for the outer shell material portion is used to move the outer shell nozzle 5A relative to the stage 6 in forming the outer shell material portion 21. Specifically, the movement path K1 for the outer shell material portion is prepared as a position resulted by correcting the movement path K2 for the inner core material portion to be shifted outward therefrom by a predetermined distance. The term "outward" refers to the side opposite to "inward" which means the center side in the movement path K2 for the inner core material portion. The predetermined distance by which the movement path K2 for the inner core material portion is shifted outward therefrom is determined so that the outer shell material portion 21 and an outline of the inner core material portion 31 are adjacent to each other, taking into account the diameter or the outline of the cross section of the outer shell material portion shaping material 20 when ejected from the outer shell nozzle 5A. The distance by which the movement path K2 for the inner core material portion is shifted outward therefrom in the correction may be set to different values as appropriate in accordance with positions at which the inner core material portion 31 is to be formed.

The data thus prepared for the movement path K1 for the outer shell material portion is used for position control in a control code in the control computer 8. The data for the movement path K1 for the outer shell material portion is used to determine positions to which the outer shell material portion shaping material 20 is ejected from the outer shell nozzle 5A moving relative to the stage 6 when the control computer 8 controls operations of the outer shell nozzle 5A and the relative movement mechanism 7. Further, the data for the movement path K1 for the outer shell material portion is prepared in plural pieces corresponding to each contour layer data D2 in plural pieces.

In this way, the control code including each data for the movement path K2 for the inner core material portion and the movement path K1 for the outer shell material portion to be used by the control computer 8 is created. The control code has only to include data of positions of the movement path K2 for the inner core material portion and the movement path K1 for the outer shell material portion, and the order for formation of the outer shell material portion 21 and the inner core material portion 31 can be determined as appropriate for the three-dimensional object 1 to be shaped.

In the present embodiment, because the movement path K1 for the outer shell material portion is prepared on the basis of the movement path K2 for the inner core material portion, the movement path K1 for the outer shell material portion can be easily prepared.

Each data for the movement path K2 for the inner core material portion and the movement path K1 for the outer shell material portion can be automatically created by a data creating program running on the design computer 80 as software. In this case, the data creation program running on the design computer 80 executes the step of creating the data for the movement path K2 of the inner core nozzle 5B for the inner core material portion and the step of creating the data for the movement path K1 of the outer shell nozzle 5A for the outer shell material portion. The data for the movement path K1 for the outer shell material portion of the outer shell nozzle 5A can be created using a position correcting function provided in the data creation program.

Further, also in the present embodiment, other configurations and components indicated by signs in the drawings are the same as those in the first embodiment, and the same operational effects as in the first embodiment can be exhibited.

The thickness of the outer shell 2 of the three-dimensional object 1 according to the present embodiment is set to be equal to the thickness of one layer of the outer shell material portion shaping material 20 ejected from the outer shell nozzle 5A. However, the thickness of the outer shell 2 may be equal to the thickness of two or more layers of the outer shell material portion shaping material 20 ejected from the outer shell nozzle 5A. In that case, the outer shell material portion shaping material 20 is ejected from the outer shell nozzle 5A so as to accumulate two or more layers of the outer shell material portion shaping material 20 in directions X and Y of the plane of the stage 6.

The inner core 3 in the present embodiment is solidly formed so as to fill the inside of the three-dimensional object 1. Alternatively, the inner core 3 may be formed into a hollow shape so as to form a cavity inside the three-dimensional object 1. The movement path K2 of the inner core nozzle 5B for the inner core material portion may be in any pattern as long as a contour position path K20 adjacent to the inside of the movement path K1 for the inner core material portion is determined. For example, as illustrated in Figure 17, the movement path K2 for the inner core material portion may be created in a state to continuously include the entire contour path K20 adjacent to the inside of the movement path K1 for the outer shell material portion. Alternatively, the movement path K2 for the inner core material portion may be created in a state to include the outline path K20 adjacent to the inside of the movement path K1 for the outer shell material portion in bits as illustrated in Figure 18.

In preparation of the movement path K2 for the inner core material portion, the contour path K20 has only to be determined on the basis of the contour layer data D2, and the movement path K2 for the inner core material portion excluding the contour path K20 may be determined at its option.

### (Fourth Embodiment)

Also in the present embodiment, a method for preparing data for nozzle movement paths and a program for preparing the data which are used in the method for manufacturing the three-dimensional object 1 and an apparatus 10 for manufacturing the three-dimensional object 1 described in the first and second embodiments in order to move the outer shell nozzle 5A and the inner core nozzle 5B relative to the stage 6, will be described. The method for preparing data for nozzle movement path and the program for preparing the data in the present embodiment differ from the method and program illustrated in the third embodiment in the order to create the movement path K1 for the outer shell material portion and the movement path K2 for the inner core material portion.

The present embodiment is similar to the third embodiment in terms of creation of the three-dimensional surface data D1 of the three-dimensional object 1 and processing into the contour layer data D2 provided in the form of a line.

In the present embodiment, the data for the movement path K1 for the outer shell material portion to eject the outer shell material portion shaping material 20 as a shaping material for forming the outer shell material portion from the outer shell nozzle 5A moving relatively to the stage 6 in forming the outer shell material portion 21 is prepared on the basis of the contour layer data D2. The data for the movement path K1 for the outer shell material portion thus prepared is used for position control in the control code in the control computer 8. Further, the data for the movement path K1 for the outer shell material portion is prepared in plural pieces corresponding to each contour layer data D2 in plural pieces.

Then, the data for the movement path K2 for the inner core material portion is prepared on the basis of the data for the movement path K1 for the outer shell material portion. At this time, a position resulted by correcting the movement path K1 for the inner core material portion to be shifted inward therefrom by a predetermined distance is determined to be the contour path K20 as a contour position of the entire movement path K2 for the inner core material portion. The term "inward" refers to the inside which means the annular center side in the movement path K1 for the outer shell material portion annularly formed. The predetermined distance by which the inner core material portion movement path K2 is shifted inward therefrom is determined so that the outer shell material portion 21 and an outline of the inner core material portion 31 are adjacent to each other, taking into account the diameter or the outline of the cross section of the inner core material portion shaping material 30 as a shaping material for forming the inner core material portion when ejected from the inner core nozzle 5B. The distance by which the movement path K1 for the outer shell material portion is shifted inward therefrom in the correction may be set to different values as appropriate in accordance with positions at which the outer shell material portion 21 is to be formed.

The data for the movement path K2 for the inner core material portion thus prepared is used for position control in the control code in the control computer 8. Further, the data for the movement path K2 for the inner core material portion is prepared in plural pieces corresponding to each contour layer data D2 in plural pieces.

In the present embodiment, because the movement path K2 for the inner core material portion is prepared on the basis of the movement path K1 for the outer shell material portion, the movement path K2 for the inner core material portion can be easily prepared.

Each data for the movement path K1 for the outer shell material portion and the movement path K2 for the inner core material portion can be automatically created by a data creating program running on the design computer 80 as software. In this case, the data creation program running on the design computer 80 executes the step of creating the data for the movement path K1 of the outer shell nozzle 5A for the outer shell material portion and the step of creating the data for the movement path K2 of the inner core nozzle 5B for the inner core material portion. The data for the movement path K2 of the inner core nozzle 5B for the inner core material portion can be created using a position correcting function provided in the data creation program.

Further, also in the present embodiment, other configurations and components indicated by signs in the drawings are the same as those in the third embodiment, and xcthe same operational effects as in the third embodiment can be exhibited.

### WORKING EXAMPLES

Hereinafter, the method for manufacturing the three-dimensional object 1 according to the present invention will be described specifically on the basis of a working example. However, the present invention is not limited to the example. In the example and a comparative example, "parts" and "%" are on a mass basis unless otherwise specified.

The outer shell material portion shaping material 20 for forming the outer shell 2 was prepared by dissolving 20 g of polymethacrylate methyl macromonomer in 100 g of tetraethylene glycol diacrylate, and further dissolving 1 g of (1-hydroxylcyclohexyl)phenylmethanone in the resulting solution.

The inner core material portion shaping material 30 for forming the inner core 3 was prepared as follows. First, 4.284 g of a cellulose derivative a(hydroxypropylcellulose, HPC, viscosity at 20 g/L-25°C in water: 150 to 400 mPa·s) was added to 77 g of N,N-dimethylacrylamide and stirred until the cellulose derivative was dissolved. Then, 0.3 mol of 2-(2-methacryloyloxyethyloxy)ethylisocyanato was added to 1 mol of pyranose ring as a constituent unit monomer of the cellulose derivative and stirred for 1 hour at a temperature of 60°C. Then, 140 mL of purified water was added thereto, and 0.22 g of α-ketoglutarate as a photo radical initiator was further added thereto and stirred to obtain an inner core material portion shaping material 30.

According to the manufacturing method described in the first embodiment, the outer shell material portion shaping material 20 was ejected from the outer shell nozzle 5A to form the outer shell material portion 21 and the inner core material portion shaping material 30 was ejected from the inner core nozzle 5B to form the inner core material portion 31, thereby forming the three-dimensional object 1 including the outer shell 2 and the inner core 3. Then, the outer shell 2 was removed from the three-dimensional object 1 to obtain the three-dimensional object 1 constituted only by the inner core 3 formed from the inner core material portion shaping material 30.

Further, the obtained three-dimensional object 1 was evaluated as follows.

### (Hardness Measurement)

A sample piece of the three-dimensional object 1 thus obtained was measured with a durometer (Duro-00 type) manufactured by TECLOCK according to ASTM D 2240 standard and the measured hardness was found to be 20.

### (Strength Measurement)

A sample piece of the three-dimensional object 1 thus obtained was punched into a dumbbell specimen (No. 6 size), then subjected to a tensile strength test using a material strength tester (EZ Graph) manufactured by Shimadzu Corporation according to JIS K625 standard, and the breaking strength was found to be 0.23 MPa, the breaking elongation was found to be 300% and the tensile modulus was found to be 0.06 N/m².

### [Comparative Example]

An inner core material portion 31 was formed by ejecting only an inner core material portion shaping material 30 from an inner core nozzle 5B without using an outer shell material portion shaping material 20 to thereby form a three-dimensional object having an inner core 3. The three-dimensional object, however, was not satisfactorily shaped because it was soft and unstable in shape.

### INDUSTRIAL APPLICABILITY

The three-dimensional object 1 obtained by the method for manufacturing the three-dimensional object 1 according to the present invention are excellent in flexibility and mechanical strength and can be expected to be used in various fields, such as human or animal biological organ models and biological tissue models for use in medical simulations, medical instrument parts such as mouth inhalation pads and arthrodesis devices, biomaterials such as prosthetic joints, cell culture sheets, soft contact lenses, drug delivery systems, medical materials such as wound dressings, flexible parts for room and automotive interiors, various shock absorbing/dumping materials, and the like. Examples of the biological organ models include models of digestive organs such as stomach, small intestine, large intestine, liver and pancreas, circulatory organs such as heart and blood vessels, reproductive organs such as prostate gland, and urinary organs such as kidney, and the like. The biological tissue models may include models of biological tissues constituting the aforementioned biological organs.

## Claims

1. A method for manufacturing a three-dimensional object, comprising the steps of:
forming an outer shell material portion that constitutes a part of an outer shell of the three-dimensional object by ejecting a shaping material from a nozzle onto a stage with the nozzle and the stage being relatively moving; and
forming an inner core material portion that constitutes a part of an inner core of the three-dimensional object by ejecting a shaping material from a nozzle to an inner region surrounded by the outer shell material portion with the nozzle and the stage being relatively moving.

2. The method for manufacturing a three-dimensional object according to claim 1, further comprising the steps of:
further forming the outer shell material portion by ejecting the shaping material from the nozzle onto the outer shell material portion with the nozzle and the stage being relatively moving; and
further forming the inner core material portion by ejecting the shaping material from the nozzle onto the inner core material portion with the nozzle and the stage being relatively moving.

3. The method for manufacturing a three-dimensional object according to claim 2, wherein the shaping material for forming the outer shell material portion and the shaping material for forming the inner core material portion are different from each other.

4. The method for manufacturing a three-dimensional object according to claim 2 or 3, wherein the outer shell formed by solidification of the outer shell material portion has a hardness higher than that of the inner core formed by solidification of the inner core material portion.

5. The method for manufacturing a three-dimensional object according to any one of claims 2 to 4,
wherein the shaping material for forming the outer shell material portion is photocurable, and
wherein in the steps of forming the outer shell material portion and further forming the outer shell material portion, the shaping material is solidified by irradiation with light while being ejected from the nozzle.

6. The method for manufacturing a three-dimensional object according to any one of claims 2 to 5,
wherein the shaping material for forming the inner core material portion is photocurable, and
wherein in the steps of forming the inner core material portion and further forming the inner core material portion, the shaping material is solidified by irradiation with light while being ejected from the nozzle.

7. The method for manufacturing a three-dimensional object according to any one of claims 2 to 6,
wherein after the step of forming the outer shell material portion, and prior to the step of forming the inner core material portion, the step of forming a rib material portion that constitutes a part of a rib to be embedded in the inner core is performed by ejecting a shaping material from the nozzle onto a bottom part composed of the outer shell material portion with the nozzle and the stage being relatively moving,
wherein in the step of forming the inner core material portion, the shaping material is ejected from the nozzle to an inside region surrounded by the outer shell material portion and the core material portion, and
wherein after the step of further forming the outer shell material portion, and prior to the step of further forming the inner core material portion, the step of further forming the rib material portion is performed by further ejecting the shaping material from the nozzle onto the rib material portion with the nozzle and the stage being relatively moving.

8. The method for manufacturing a three-dimensional object according to claim 7, wherein in the steps of forming the rib material portion and further forming the rib material portion, the rib is formed of the shaping material in a lattice shape or in a honeycombed shape.

9. The method for manufacturing a three-dimensional object according to claim 7 or 8, wherein the rib formed by solidification of the rib material portion has a hardness higher than that of the inner core formed by solidification of the inner core material portion.

10. The method for manufacturing a three-dimensional object according to any one of claims 1 to 9, wherein after the three-dimensional object has been formed, the step of removing the outer shell from the three-dimensional object is performed.

11. The method for manufacturing a three-dimensional object according to any one of claims 1 to 10, wherein the shaping material comprises at least one kind selected from a polymer and a polymerizable monomer.

12. The method for manufacturing a three-dimensional object according to claim 11, wherein the shaping material comprises at least one kind selected from a photo-radical generator and a photoacid generator.

13. The method for manufacturing a three-dimensional object according to claim 11 or 12, wherein the polymerizable monomer comprises at least one kind selected from a radical-polymerizable unsaturated compound and a cationic-polymerizable compound.

14. The manufacturing method for a three-dimensional object according to any one of claims 11 to 13, wherein the shaping material comprises a solvent.

15. The manufacturing method for a three-dimensional object according to claim 14, wherein the solvent is contained in an amount of 1 mass% or more and 99 mass% or less with respect to a total amount of the shaping material.

16. The manufacturing method for a three-dimensional object according to claim 14, wherein the solvent is contained in an amount of 20 mass% or more and 80 mass% or less with respect to a total amount of the shaping material.

17. The manufacturing method for a three-dimensional object according to any one of claims 14 to 16, wherein the solvent comprises at least one kind selected from a polar solvent and an ionic liquid.

18. The manufacturing method for a three-dimensional object according to claim 17, wherein the polar solvent comprises at least one kind selected from water, alcohols, alkyl ethers of polyhydric alcohol, and aprotic polar solvents.

19. A method for preparing data for nozzle movement paths, to be used in the method for manufacturing a three-dimensional object according to any one of claims 1 to 18, comprising the steps of:
preparing three-dimensional surface data of the three-dimensional object to be shaped by designing or capturing;
processing the three-dimensional surface data into contour layer data in the form of a line by slicing the three-dimensional surface data at regular intervals in a predetermined direction, the contour layer data being accumulated in plural layers in the predetermined direction;
preparing data for the nozzle movement path for the inner core material portion to be used in ejecting the shaping material for forming the inner core material portion from the nozzle on the basis of the contour layer data; and
preparing data for the nozzle movement path for the outer shell material portion to be used in ejecting the shaping material for forming the outer core material portion from the nozzle on the basis of a position resulted by correcting the nozzle movement path for the inner core material portion to be shifted outward therefrom by a predetermined distance.

20. A method for preparing data for nozzle movement paths, to be used in the method for manufacturing a three-dimensional object according to any one of claims 1 to 18, comprising the steps of:
preparing three-dimensional surface data of the three-dimensional object to be shaped by designing or capturing;
processing the three-dimensional surface data into contour layer data in the form of a line by slicing the three-dimensional surface data at regular intervals in a predetermined direction, the contour layer data being accumulated in plural layers in the predetermined direction;
preparing data for the nozzle movement path for the outer shell material portion to be used in ejecting the shaping material for forming the outer shell material portion from the nozzle on the basis of the contour layer data; and
preparing data for the nozzle movement path for the inner core material portion to be used in ejecting the shaping material for forming the inner core material portion from the nozzle by setting a position resulted by correcting the movement path for the outer shell material portion to be shifted inward therefrom by a predetermined distance as a position of a contour in the entirety of the nozzle movement path for the inner core material portion.

21. An apparatus for manufacturing a three-dimensional object including an outer shell and an inner core that is provided inside the outer shell, comprising:
an outer shell nozzle configured to eject a shaping material for forming the outer shell material portion for use in forming the outer shell;
an inner core nozzle configured to eject a shaping material for forming the inner core material portion for use in forming the inner core;
a stage configured so that the shaping material for forming the outer shell material portion ejected from the outer shell nozzle and the shaping material for forming the inner core material portion ejected from the inner core nozzle are accumulated thereon;
a relative movement device configured to relatively move the stage and the outer shell nozzle and to relatively move the stage and the inner core nozzle; and
a control computer configured to control motions of the outer shell nozzle, the inner core nozzle, and the relative movement device; wherein
the control computer is configured to control so that an outer shell material portion that constitutes a part of the outer shell is formed on the stage using the shaping material for forming the outer shell material portion ejected from the outer shell nozzle, and an inner core material portion that constitutes a part of the inner core is formed on the stage using the shaping material for forming the inner core material portion ejected from the inner core nozzle to an inner region surrounded by the outer shell material portion.

22. A program of a design computer for preparing data for movement paths of the outer shell nozzle and the inner core nozzle, to be used in the manufacturing apparatus for a three-dimensional object according to claim 21, the program instructing the design computer to execute the steps of:
preparing the data for the movement path of the inner core nozzle on the basis of contour layer data obtained in the form of a line by slicing three-dimensional surface data of the three-dimensional object to be shaped at regular intervals in the predetermined direction, the contour layer data being accumulated in plural layers in the predetermined direction; and
preparing the data for the movement path of the outer shell nozzle on the basis of a position resulted by correcting the movement path of the inner core nozzle to be shifted outward therefrom by a predetermined distance.

23. A program of a design computer for preparing data for movement paths of the outer shell nozzle and the inner core nozzle, to be used in the manufacturing apparatus for a three-dimensional object according to claim 21, the program instructing the design computer to execute the steps of:
preparing the data for movement path of the outer shell nozzle on the basis of contour layer data obtained in the form of a line by slicing three-dimensional surface data of the three-dimensional object to be shaped at regular intervals in the predetermined direction, the contour layer data being accumulated in plural layers in the predetermined direction; and
preparing the data for the movement path of the inner core nozzle on the basis of a position resulted by correcting the movement path of the outer shell nozzle to be shifted inward therefrom by a predetermined distance.
